# EUROPEAN PATENT APPLICATION

(11) **EP 4 733 672 A1**
(43) Date of publication of application: **29.04.2026**
(21) Application number: 24882609.1
(22) Date of filing: 14.08.2024
(51) Int. Cl.: F24C 7/08, H05B 6/68, A47J 36/32, H04N 23/57, G06V 20/68, G06T 7/90

(54) **COOKING APPARATUS AND COOKING CONTROL METHOD**

(30) Priority: 25.10.2023 KR 20230144056
(71) Applicant: Samsung Electronics Co., Ltd., Suwon-si, Gyeonggi-do 16677 (KR)
(72) Inventor: LEE, Jaehyuk, Suwon-si Gyeonggi-do 16677 (KR); CHOI, Eunha, Suwon-si Gyeonggi-do 16677 (KR); KWON, Jihye, Suwon-si Gyeonggi-do 16677 (KR); LEE, Joayoung, Suwon-si Gyeonggi-do 16677 (KR)
(74) Representative: Gulde & Partner
(86) International application number: PCT/KR2024/012114
(87) International publication number: WO 2025/089580

(57) **Abstract**

The disclosure relates to a cooking appliance providing the context of cooking food as an image and a method for controlling the same. The cooking appliance may be configured to determine an internal temperature of a cooking thing based on at least one surface temperature sensed on a surface of the cooking thing by a non-contact temperature sensor, obtain a reference cross-sectional image corresponding to the determined internal temperature among reference cross-sectional images pre-registered for each cooking progress state of the cooking thing, as a virtual cross-sectional image for feeding back the cooking progress state, and output the same.

## Description

### [Technical Field]

Embodiments of the present disclosure relate to a cooking appliance providing context of cooking food as an image and a method for controlling the same.

### [Background Art]

In general, a cooking appliance may be a home appliance that uses electricity to generate at least one from among high frequency (or microwave), radiant heat, and convection heat to cook food or cooking things (hereinafter collectively referred to as a "cooking thing"). Representative examples of the cooking appliance include microwave ovens or ovens. As an example, the microwave oven is a device that generates microwaves inside a cooking chamber and cooks a cooking thing.

The cooking appliance may provide a method of cooking using radiant heat or convective heat in addition to a method of cooking using microwaves. In this case, the cooking appliance may provide a recipe according to cooking things using various heating sources. For example, the cooking appliance may provide a function of heating the cooking thing using a high frequency, baking the cooking thing using a grilling device, or cooking the cooking thing using a convection device.

In order to provide a more accurate and detailed recipe, a cooking appliance that provides a recipe using various heating sources such as high frequency, radiant heat, or convective heat needs to be provided with a method capable of predicting the size or volume of the cooking thing in addition to the type of the cooking thing or its state such as a solid, liquid, or frozen state.

### [Disclosure]

### [TECHNICAL SOLUTION]

Various embodiments of the present disclosure may provide a cooking appliance and a method for controlling the same, which outputs a cooking thing cross-sectional image and is capable of measuring the cooking state of the cooking thing being cooked based on a recipe reflecting the user's intention.

According to embodiments, a cooking appliance is provided and includes a main body; memory including one or more storage media storing instructions; at least one non-contact sensor; and at least one processor including a processing circuit. The instructions are configured to, when executed individually or collectively by the at least one processor, cause the cooking appliance to determine an internal temperature of a cooking thing based on at least one surface temperature sensed on a surface of the cooking thing by a non-contact temperature sensor, which is one of the at least one non-contact sensor. The instructions are configured to, when executed individually or collectively by the at least one processor, cause the cooking appliance to obtain, as a virtual cross-sectional image of the cooking thing, a reference cross-sectional image corresponding to the internal temperature among reference cross-sectional images corresponding to cooking progress states. The instructions are configured to, when executed individually or collectively by the at least one processor, cause the cooking appliance to output the virtual cross-sectional image. Each of the cooking progress states is a degree of internal cooking of the cooking thing that changes as cooking of the cooking thing progresses, and wherein the reference cross-sectional images include identification information indicating the degree of internal cooking of the cooking thing according to a cooking progress state among the cooking progress states.

According to embodiments, a method for controlling a cooking appliance is provided and includes determining an internal temperature of a cooking thing based on at least one surface temperature sensed on a surface of the cooking thing by a non-contact temperature sensor. A method for controlling a cooking appliance is provided and includes obtaining, as a virtual cross-sectional image of the cooking thing, a reference cross-sectional image corresponding to the internal temperature among reference cross-sectional images corresponding to cooking progress states. A method for controlling a cooking appliance is provided and includes outputting the virtual cross-sectional image. Each of the cooking progress states is a degree of internal cooking of the cooking thing that changes as the cooking of the cooking thing progresses, and wherein the reference cross-sectional images include identification information indicating the degree of internal cooking of the cooking thing according to a cooking progress state among the cooking progress states.

According to embodiments, a non-transitory computer readable medium including computer instructions is provided. The computer instructions are configured to, when executed by at least one processor, cause the at least one processor to: determine an internal temperature of a cooking thing based on at least one surface temperature sensed on a surface of the cooking thing by a non-contact temperature sensor; obtain, as a virtual cross-sectional image of the cooking thing, a reference cross-sectional image corresponding to the internal temperature among reference cross-sectional images corresponding to cooking progress states; and output the virtual cross-sectional image, wherein each of the cooking progress states is a degree of internal cooking of the cooking thing that changes as the cooking of the cooking thing progresses, and wherein the reference cross-sectional images include identification information indicating the degree of internal cooking of the cooking thing according to a cooking progress state among the cooking progress states.

According to an embodiment, the state of the inside of the food being cooked in the cooking appliance may be visually identified, and the food to be completely cooked may be previously identified, making it possible for the user to take the food reflecting his or her intention.

Technical aspects of embodiments of the present disclosure are not limited to the foregoing, and other technical aspects may be derived by one of ordinary skill in the art from example embodiments of the present disclosure.

Effects of embodiments of the present disclosure are not limited to the foregoing, and other unmentioned effects would be apparent to one of ordinary skill in the art from the following description. In other words, other effects of embodiments of the present disclosure may also be derived by one of ordinary skill in the art from example embodiments of the present disclosure.

### [DESCRIPTION OF DRAWINGS]

FIG. 1 is a perspective view illustrating a cooking appliance according to an embodiment.
FIG. 2 is a view illustrating an example in which a cooking appliance detects a progress of cooking of a cooking thing by sensors according to an embodiment of.
FIG. 3A or FIG. 3B is a view illustrating a thermal deviation spectrum obtained using a non-contact temperature sensor in a cooking appliance according to an embodiment.
FIG. 4 is a control flowchart for providing a cooking state image in a cooking appliance according to an embodiment of.
FIG. 5 is a view illustrating an operation step for generating a cooking state image in a cooking appliance according to an embodiment of.
FIGS. 6A and 6B are control flowcharts for applying a cooking environment to each partial area of a cooking thing in a cooking appliance according to an embodiment of.
FIG. 7 is a view illustrating an example of displaying an area requiring additional cooking on a cooking thing image in a cooking appliance according to an embodiment of.
FIGS. 8A and 8B are views illustrating an example of providing a virtual cross-sectional image of a cooking thing in a cooking appliance according to an embodiment.
FIG. 9A is a view illustrating an example of a user interface for controlling a cooking environment of a cooking thing in a cooking appliance according to an embodiment of.
FIGS 9B to 9E are example views for providing a cross-sectional image of a cooking thing in a cooking appliance according to an embodiment of.
FIGS. 10A and 10B are control flowcharts for applying a cooking environment to each partial area of a cooking thing in a cooking appliance according to an embodiment of.
FIG. 11 is a view illustrating an example of dividing a cooking thing image to detect an area requiring additional cooking in a cooking appliance according to an embodiment.
FIG. 12 is an example view illustrating an environment for controlling a cooking appliance according to an embodiments of.
FIG. 13 is a block diagram illustrating a configuration of a cooking appliance and an external device according to various embodiments of the present disclosure.
FIGS. 14A to C are views illustrating examples of installing a non-contact sensor in a cooking appliance according to various embodiments.
FIGS. 15A to 15F are views illustrating examples of a user interface for controlling a cooking process of a cooking thing in an external device according to an embodiment.
FIG. 16 is a view illustrating an example of synchronizing a cooking progress state image based on cooking progress information shared between a cooking appliance and an external device according to an embodiment.
FIG. 17 is a view illustrating an example of a user interface for controlling a degree of cooking of a cooking thing in a cooking appliance according to an embodiment of.

### [MODE FOR INVENTION]

Non-limiting example embodiments of the present disclosure are now described with reference to the accompanying drawings in such a detailed manner as to be easily practiced by one of ordinary skill in the art. However, embodiments of the present disclosure may be implemented in other various forms and is not limited to the example embodiments set forth herein. The same or similar reference denotations may be used to refer to the same or similar elements throughout the specification and the drawings. Further, for clarity and brevity, description of well-known functions and configurations in the drawings and relevant descriptions may be omitted.

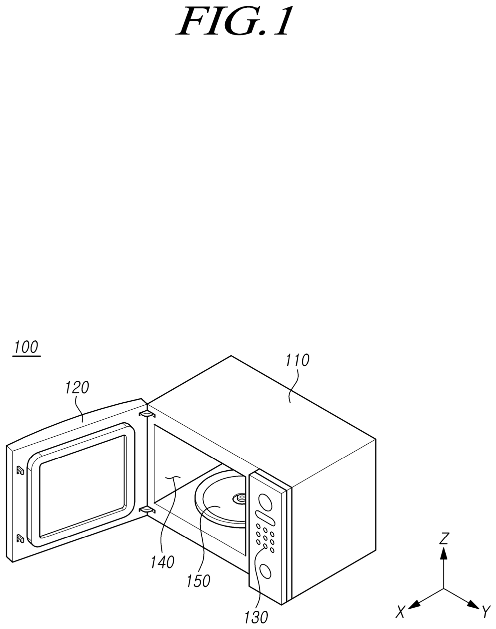

FIG. 1 is a perspective view illustrating a cooking appliance according to an embodiment.

Referring to FIG. 1, a cooking appliance 100 may include a main body 110 forming an exterior thereof, a cavity 140 provided inside the main body 110 to receive an object to be cooked (hereinafter referred to as a "cooking thing"), a front panel 130 disposed on a front surface of the main body 110 and including a plurality of operation buttons for controlling the cooking appliance 100, a tray assembly 150 disposed on an inner bottom of the cavity 140 to rotate the cooking thing placed thereon, and/or a door assembly 120 disposed on a front surface of the main body 110 to open and close the cavity 140. The front panel 130 may include a display, and may display information about an operation mode or a weight measured by the cooking thing through the display.

The cooking appliance 100 may be a home appliance capable of cooking the cooking thing using at least one from among microwaves, radiant heat, and hot air. According to an embodiment, the cooking appliance 100 may support at least one from among a microwave mode, an oven mode, and an air-fryer mode. According to embodiments, a component, such as a microwave generator for radiating microwaves, a grill heater for radiating radiant heat, and/or a convection heater for generating hot air, may be disposed on at least one from among inner surfaces of the cavity 140 of the cooking appliance 100. A temperature sensor for sensing the internal temperature of the cavity 140 may be provided on the inner rear side (e.g., surface) of the cavity 140. The cavity 140 may be surrounded by an insulator to insulate the cavity 140 from the outside.

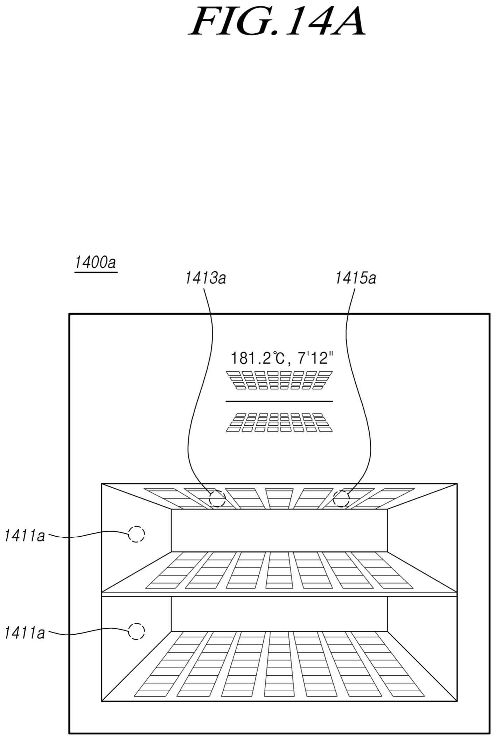

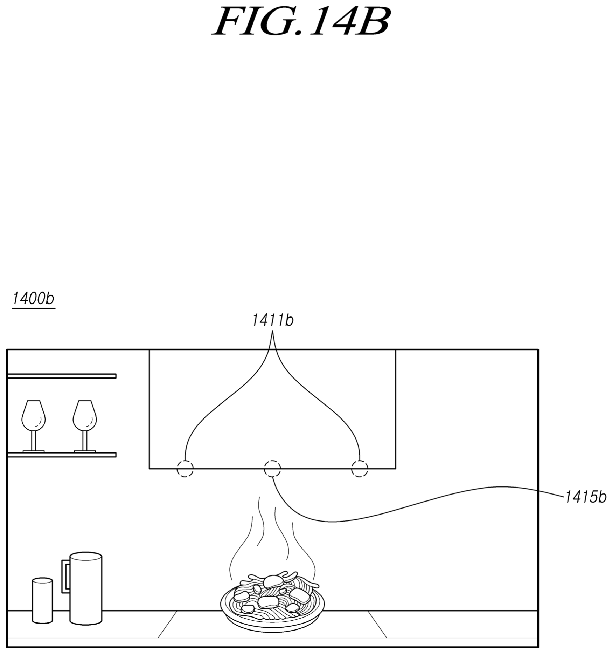

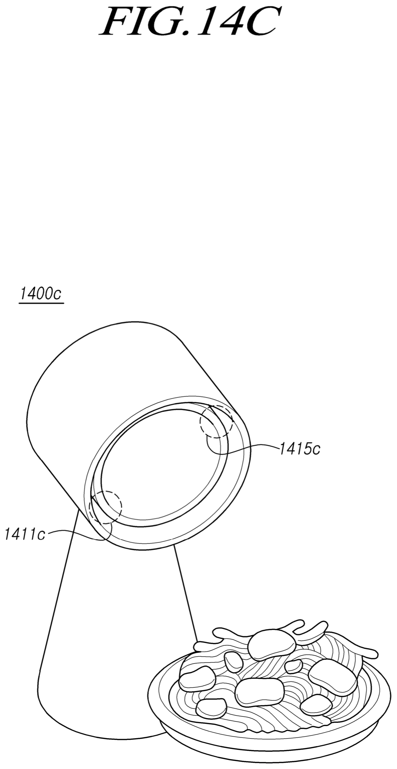

In the above description, a microwave oven is assumed as the cooking appliance, but this is an example, and the cooking appliance according to may be diverse. For example, the cooking appliance may include a smart oven (e.g., see FIG. 14A), a smart hood (e.g., see FIG. 14B), or a smart alone product (e.g., see FIG. 14C).

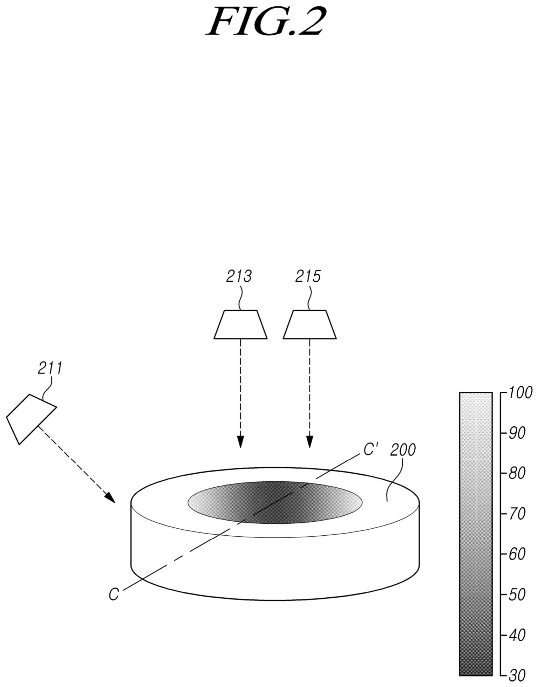

FIG. 2 is a view illustrating an example in which a cooking appliance (e.g., the cooking appliance 100 of FIG. 1) senses a cooking progress of a cooking thing by sensors according to an embodiment.

Referring to FIG. 2, in the cooking appliance 100, a plurality of non-contact sensors (e.g., non-contact temperature sensors 211 and 213 and a vision sensor 215) may be disposed toward the cooking thing 200. An orientation of the plurality of non-contact sensors (e.g., the non-contact temperature sensors 211 and 213 and the vision sensor 215) may be automatically and/or manually adjusted. The plurality of non-contact sensors (e.g., the non-contact temperature sensors 211 and 213 and the vision sensor 215) may provide a sensing operation for sensing the cooking state of the cooking thing 200 before, during, or after cooking is completed. The plurality of non-contact sensors (e.g., the non-contact temperature sensors 211 and 213 and the vision sensor 215) may sense the state (e.g., the shape, the type, the size, the thickness, and/or the volume) of the cooking thing 200 and output a first sensing signal which is an electrical signal corresponding thereto. The plurality of non-contact sensors (e.g., the non-contact temperature sensors 211 and 213 and the vision sensor 215) may sense the temperature (e.g., radiant heat corresponding to thermal energy emitted from the cooking thing 200) before the cooking of the cooking thing 200 is performed, and may output a second sensing signal which is an electrical signal corresponding thereto. For reference, the illustrated line c-c' may be a virtual cut line to provide a cross-sectional image of the cooking thing 200 to be described below.

According to an embodiment, the plurality of non-contact sensors provided in the cooking appliance 100 may include at least two non-contact temperature sensors 211 and 213. The non-contact temperature sensors 211 and 213 may be thermal image cameras, but are not limited thereto. The non-contact temperature sensors 211 and 213 may output a sensing signal (hereinafter, referred to as a "temperature sensing signal") corresponding to the surface temperature of the cooking thing 200 based on the radiant heat in the cooking thing 200 without direct contact with the cooking thing 200. The temperature sensing signal may include a "side surface temperature sensing signal," a "upper surface temperature sensing signal," and/or a "lower surface temperature sensing signal" considering the position of the cooking thing 200 at which the surface temperature is measured by the non-contact temperature sensors 211 and 213. The side surface temperature sensing signal may be, for example, a temperature sensing signal according to the side radiant heat of the cooking thing 200. The side surface temperature sensing signal may include a plurality of side surface temperature sensing signals according to the direction toward the cooking thing 200. For example, the side surface temperature sensing signal may be divided into four side surface temperature sensing signals, such as front, rear, left, and/or right. The upper surface temperature sensing signal may be, for example, a temperature sensing signal according to the upper surface radiant heat of the cooking thing 200. There may be provided one or more side surface temperature sensing signals and/or one or more upper surface temperature sensing signals. For example, the plurality of side surface temperature sensing signals and/or the upper surface temperature sensing signals may be temperature sensing signals measured for a plurality of points rather than one point on the side surface and/or the upper surface of the cooking thing 200. For example, the cooking appliance 100 may include a plurality of non-contact temperature sensors facing the side surface and/or the upper surface for each point at which the surface temperature is to be measured, or may be implemented to sense surface temperatures at a plurality of points using one non-contact temperature sensor.

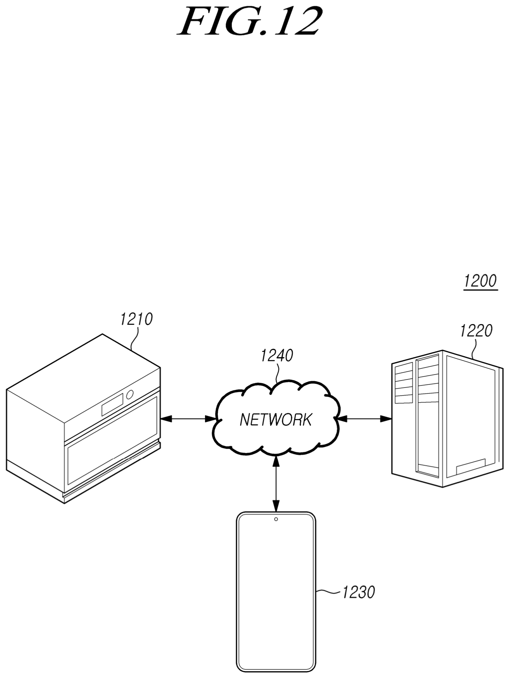

The non-contact temperature sensors 211 and 213 may produce an image using heat rather than visible light. Like light, the heat (infrared or thermal energy) may be in the form of energy belonging to the category of the electromagnetic spectrum. The non-contact temperature sensors 211 and 213 may receive, for example, infrared energy and may output a temperature sensing signal, which is an electrical signal corresponding to a digital or analog image, using data of the infrared energy. The non-contact temperature sensors 211 and 213 may very precisely measure heat (e.g., radiant heat generated from the cooking thing 200). For example, the non-contact temperature sensors 211 and 213 may operate sensitively enough to sense a small temperature difference of about 0.01°C. The temperature sensing signals output by the non-contact temperature sensors 211 and 213 may be used by a display device (e.g., the cooking appliance 1210 or the external device 1230 of FIG. 12) to display the surface temperature of the cooking thing 200 in black and white or in a desired color palette. When the surface temperatures between the two points on the surface of the cooking thing 200 are subtly different, the non-contact temperature sensors 211 and 213 may clearly sense a difference in surface temperature between the two points regardless of lighting conditions. Accordingly, the non-contact temperature sensors 211 and 213 may accurately identify the surface temperature of the cooking thing 200 even in a dark or smoke-filled environment.

According to an embodiment, the plurality of non-contact sensors (e.g., the non-contact temperature sensors 211 and 213 and the vision sensor 215) provided in the cooking appliance 100 may include at least one vision sensor 215. The vision sensor 215 may be a vision camera, but is not limited thereto. The vision sensor 215 may output a sensing signal (hereinafter, referred to as a "vision sensing signal") corresponding to information about the appearance of the cooking thing 200, such as the shape, size, thickness, and/or pattern of the cooking thing 200, without direct contact with the cooking thing 200. The vision sensing signal may include a "side surface object image," a "upper surface object image," and/or a "lower surface object image" considering the position of the cooking thing 200 at which the object image is measured by the vision sensor 215. There may be provided one or more vision sensing signals. For example, the plurality of vision sensing signals may be vision sensing signals measured for at least one side surface and/or upper surface of the cooking thing 200. For example, the cooking appliance 100 may include vision sensors, each respectively facing the side surface and/or the upper surface.

The vision sensor 215 may be a camera or sensor capable of determining the size, the character, the pattern, and/or the like of the object (e.g., the cooking thing 200), such as may be determined with the human eye. The vision sensor 215 may extract and provide a lot of information for precisely and sharply analyzing the object to be sensed. For example, the vision sensor 215 may be mainly used for image processing and data extraction of the external appearance of the cooking thing 200. The vision sensor 215 may calculate the number of bright or dark pixels, or may divide the digital image to simplify and change the image to make it easier to analyze the image, or may identify the object (e.g., the cooking thing 200) and evaluate the color quality using the color. The vision sensor 215 may separate the features using the color of the object (e.g., the cooking thing 200), may inspect the degree of cooking of the cooking thing 200 based on the contrast of the image pixel, or may perform neural network/deep learning/machine learning processing or barcode, data matrix, and two-dimension (2D) barcode reading and/or optical character recognition to compare it with a stored target value, and may determine a predetermined issue such as the degree of cooking based on the comparison result.

In the above description, a configuration for sensing the cooking progress of the cooking thing 200 using three non-contact sensors (e.g., two non-contact temperature sensors 211 and 213 and one vision sensor 215) has been described, but embodiments of the present disclosure are not limited thereto. For example, there may be three or more non-contact temperature sensors, or two or more vision sensors. In the following description of the present disclosure, for convenience of description, two non-contact temperature sensors and/or one vision sensor is described, but embodiments of the present disclosure are not limited thereto.

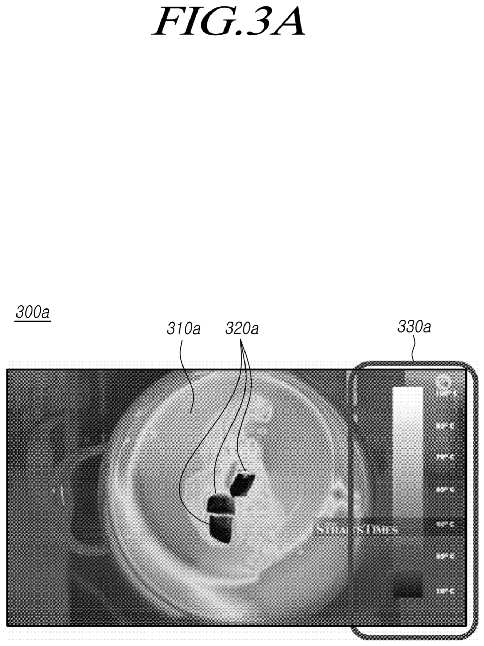

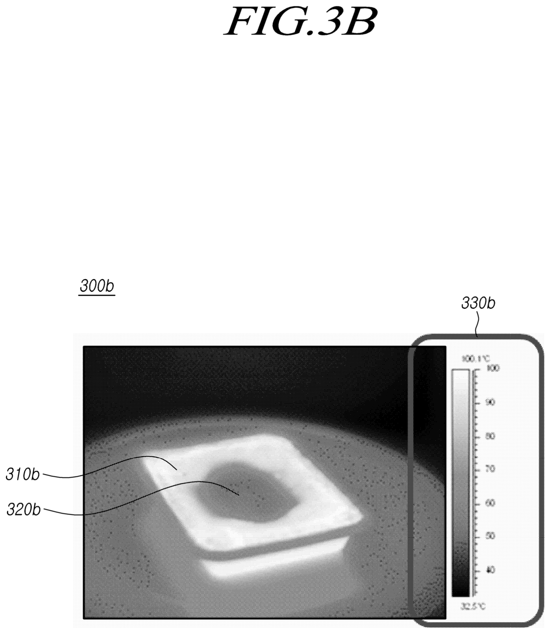

FIG. 3A or FIG. 3B is a view illustrating a thermal deviation spectrum 330a or 330b obtained using a non-contact temperature sensor (e.g., the non-contact temperature sensors 211 and 213 of FIG. 2) in a cooking appliance (e.g., the cooking appliance 100 of FIG. 1) according to an embodiment.

Referring to FIG. 3A and 3B, the cooking thing 310a or 310b may be placed inside the cooking appliance 100 and then cooked. When cooking by the cooking appliance 100 proceeds, the surface temperature of the cooking thing 310a or 310b may increase. In this case, the rising temperature of the cooking thing 310a or 310b may be different for each point of the surface. For example, the temperature rise rate of the cooking thing 310a or 310b may differ between the temperature rise rate of the portions 320a and 320b in which the material for which the temperature rise may be relatively slow and the portions in which it is not. For example, when the entire surface of the cooking thing 310a or 310b is not uniformly heated by the cooking appliance 100, the cooking thing 310a or 310b may have a portion in which temperature rise is relatively fast and a portion 320a or 320b in which it is not. For example, even when the initial surface temperature of the cooking thing 310a or 310b is not uniform, the cooking thing 310a or 310b may have a portion in which the temperature rise is relatively fast and a portion in which it is not.

As described above, while cooking is being performed on the cooking thing 310a or 310b, the surface temperatures of the portions 320a and 320b having relatively slow temperature rise may be measured by the non-contact temperature sensors 211 and 213 to be relatively low compared to the surroundings. Accordingly, even if cooking is performed in one cooking environment (e.g., the same cooking time and/or the same cooking temperature), a radiant heat deviation may occur on the surface of the cooking thing 200.

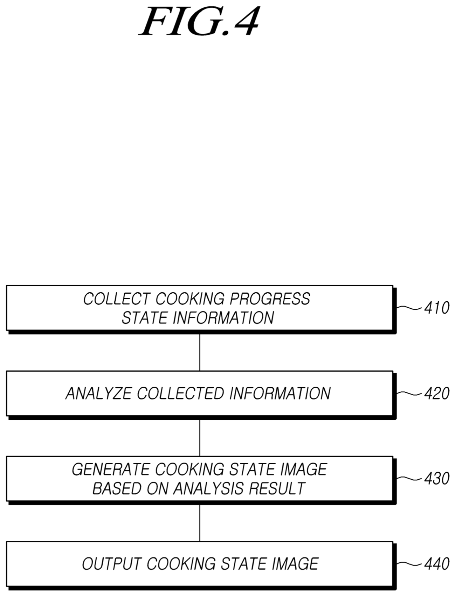

FIG. 4 is a control flowchart for providing a cooking state image in a cooking appliance (e.g., the cooking appliance 100 of FIG. 1) according to an embodiment.

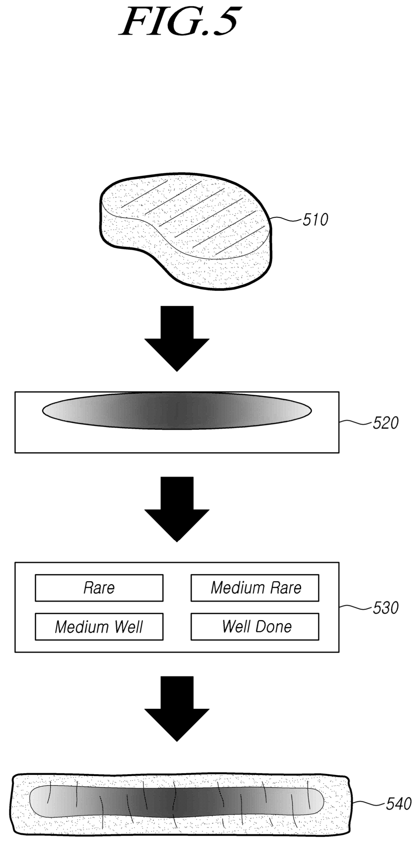

Referring to FIG. 4, in operation 410, the cooking appliance 100 may collect cooking progress information about a cooking thing (e.g., the cooking thing 200 of FIG. 2). The cooking progress information may be, for example, information of an external image 510 (see FIG. 5) of the cooking thing 200 obtained by at least one vision sensor (e.g., the vision sensor 215 of FIG. 2) included in the at least one non-contact sensor. The cooking progress information may be, for example, a surface temperature measured based on radiant heat of the cooking thing 200 being cooked by at least one thermal image sensor (e.g., the non-contact temperature sensors 211 and 213 of FIG. 2) included in the at least one non-contact sensor.

In operation 420, the cooking appliance 100 may analyze the collected cooking progress information. For example, the cooking appliance 100 may analyze the type and/or size of the cooking thing 200 using information obtained by the vision sensor 215. For example, the cooking appliance 100 may identify the surface temperature of the cooking thing 200 being cooked by analyzing information obtained by the at least one thermal image sensor (e.g., the non-contact temperature sensors 211 or 213). The cooking appliance 100 may obtain the internal temperature of the cooking thing 200 based on the surface temperature.

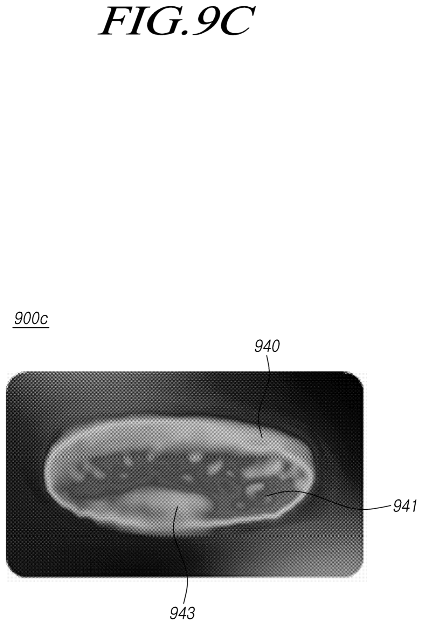

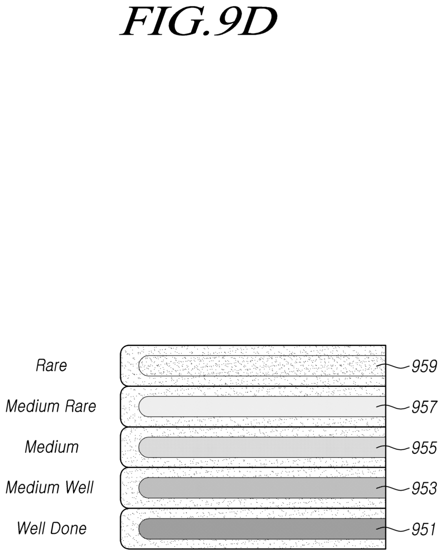

In operation 430, the cooking appliance 100 may generate a cooking state image of the cooking thing 200 based on the analysis result. For example, the cooking appliance 100 may select one from among pre-registered reference cross-sectional images (e.g., the reference cross-sectional images 951, 953, 955, 957, and 959 of FIG. 9D) as a virtual cross-sectional image based on the obtained internal temperature. The reference cross-sectional images may be registered or updated through training based on an AI function. The cooking appliance 100 may have the reference cross-sectional images in a database (DB). The cooking appliance 100 may transfer the obtained internal temperature to an external device (e.g., the external device 1230 of FIG. 12) or a server (e.g., the server 1220 of FIG. 12), and may receive a virtual cross-sectional image from the external device 1230 or the server 1220 in response thereto. The virtual cross-sectional image may be one from among a two-dimensional image and a three-dimensional image.

In operation 440, the cooking appliance 100 may output the virtual cross-sectional image as a cooking state image through an internal display. The cooking appliance 100 may transfer the virtual cross-sectional image to the external device 1230 and output the virtual cross-sectional image through the display of the external device 1230.

FIG. 5 is a view illustrating an operation step for generating a cooking state image in a cooking appliance (e.g., the cooking appliance 100 of FIG. 1) according to an embodiment.

Referring to FIG. 5, the cooking appliance 100 may obtain an external image 510 of the cooking thing 200 by at least one vision sensor (e.g., the vision sensor 215 of FIG. 2) included in the at least one non-contact sensor. The external image 510 may be an image from which it is easy to identify the type (e.g., meat, pizza, dumplings, etc.) and/or shape (e.g., size, thickness, texture, appearance, etc.) of the cooking thing 200. The cooking appliance 100 may identify the type and/or shape of the cooking thing 200 based on the external image 510.

The cooking appliance 100 may measure the surface temperature due to radiant heat of the cooking thing 200 being cooked by at least one thermal image sensor (e.g., the non-contact temperature sensors 211 and 213 of FIG. 2) included in the at least one non-contact sensor. The cooking appliance 100 may predict the internal temperature 520 of the cooking thing 200 using the surface temperature. The internal temperature 520 may be used as a criterion for classifying the degree of cooking (e.g., rare, medium rate, medium well, or well done) of the cooking thing 200. The internal temperature may be, for example, a temperature predicted from a cross section of the cooking thing 200 in an arbitrary cut line (e.g., the cut line c-c' of FIG. 2) of the cooking thing 200. In the drawings, the internal temperature 520 is expressed in contrast. For example, a portion having high contrast may have a relatively low internal temperature compared to a portion having low contrast. In other words, the internal temperature may decrease toward the center of the cooking thing 200.

The cooking appliance 100 may select one of pre-registered reference cross-sectional images 530 (e.g., the cross-sectional images 951, 953, 955, 957, and 959 of FIG. 9D) as a virtual cross-sectional image 540 based on the obtained internal temperature. The reference cross-sectional images 530 may be registered or updated through training based on an AI function. The cooking appliance 100 may have the reference cross-sectional images 530 in a database (DB). The cooking appliance 100 may transfer the obtained internal temperature to an external device (e.g., the external device 1230 of FIG. 12) or a server (e.g., the server 1220 of FIG. 12), and may receive the virtual cross-sectional image 540 from the external device 1230 or the server 1220 in response thereto. The virtual cross-sectional image 540 may be one from among a two-dimensional image and a three-dimensional image.

The cooking appliance 100 may output the virtual cross-sectional image 540 through an internal display. The cooking appliance 100 may transfer the virtual cross-sectional image 540 to the external device 1230 and output the virtual cross-sectional image 540 through the display of the external device 1230.

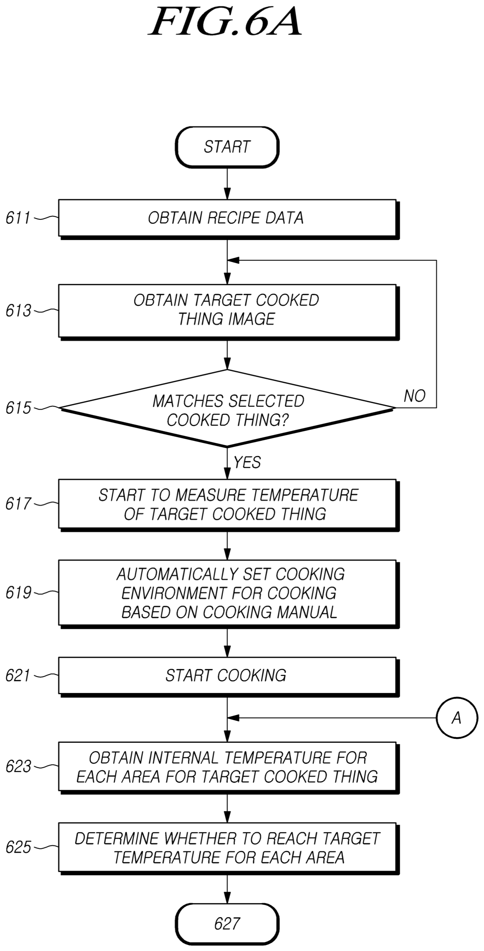

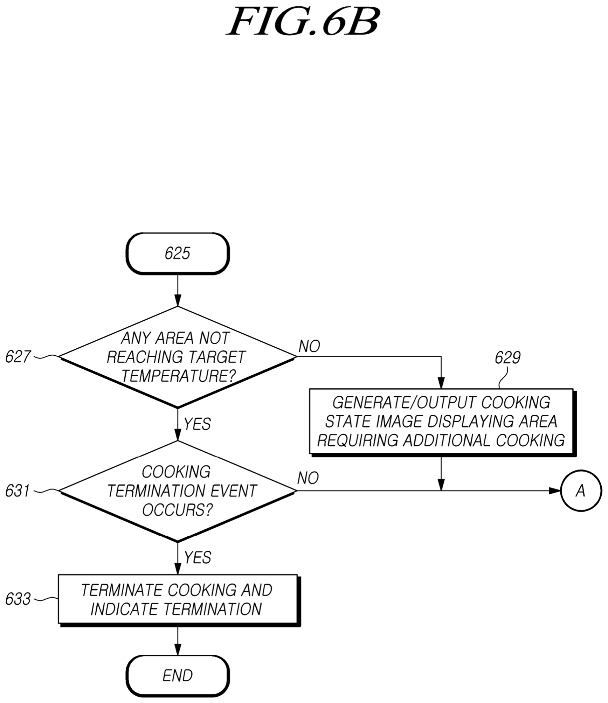

FIGS. 6A and 6B are control flowcharts for applying a cooking environment to each partial area of a cooking thing (e.g., the cooking thing 200 of FIG. 2) in a cooking appliance (e.g., the cooking appliance 100 of FIG. 1) according to an embodiment.

Referring to FIG. 6A or 6B, in operation 611, the cooking appliance 100 may obtain recipe data for cooking the cooking thing 200. The cooking appliance 100 may obtain pre-registered recipe data corresponding to the cooking thing 200 from the database DB for managing the recipe. The cooking appliance 100 may obtain a barcode corresponding to the cooking thing 200 or obtain recipe data corresponding to the cooking thing 200 from a registered user manual. The cooking appliance 100 may transfer information about the cooking thing 200 to an external device (e.g., the external device 1230 of FIG. 12) or a server (e.g., the server 1220 of FIG. 12), and may receive recipe data from the external device 1230 or the server 1220 in response thereto.

In operation 613, the cooking appliance 100 may obtain an image of the target cooking thing 200 by at least one vision sensor (e.g., the vision sensor 215 of FIG. 2) included in the at least one non-contact sensor. When the cooking appliance 100 fails to obtain the image of the target cooking thing 200 using the vision sensor 215, the cooking appliance 100 may request and receive information about the target cooking thing 200 from the user.

In operation 615, the cooking appliance 100 may determine whether the cooking thing obtained based on the recipe matches the target cooking thing. When the cooking thing obtained based on the recipe does not match the target cooking thing, the cooking appliance 100 may repeatedly perform operation 613.

When the cooking thing obtained based on the recipe matches the target cooking thing, the cooking appliance 100 may start measuring the temperature of the target cooking thing 200 in operation 617. In other words, the sensing operation of at least one thermal image sensor (e.g., the non-contact temperature sensors 211 and 213 of FIG. 2) included in the at least one non-contact sensor for measuring the surface temperature of the target cooking thing 200 may be started.

In operation 619, the cooking appliance 100 may automatically set a cooking environment for cooking the target cooking thing 200 based on the cooking manual, i.e., the previously obtained recipe. The cooking environment may be determined by setting, for example, a cooking temperature and/or a cooking time for cooking the target cooking thing 200. When the automatic setting of the cooking environment fails, the cooking appliance 100 may set a cooking environment reflecting the intention of the user by interacting with the user.

In operation 621, the cooking appliance 100 may start cooking the target cooking thing 200 by applying the cooking environment. The cooking may be started by controlling the operation of a heater provided in the cooking appliance 100.

In operation 623, the cooking appliance 100 may obtain an internal temperature and/or a surface temperature for each area of the target cooking thing 200. The cooking appliance 100 may divide the target cooking thing 200 into a predetermined area, and may sense the surface temperature for each divided area using the non-contact temperature sensors 211 and 213. The cooking appliance 100 may predict the internal temperature in the corresponding divided area based on the surface temperature sensed for each divided area. The predetermined area may be divided considering cooking ingredients distributed in the target cooking thing 200. For example, the area of the target cooking thing 200 may be divided considering the positions of cooking ingredients to which a similar cooking environment may be applied.

In operation 625, the cooking appliance 100 may determine whether the internal temperature or the surface temperature measured in the corresponding divided area reaches a target temperature for each divided area. This may be to determine whether the cooking of the cooking ingredient included in the corresponding divided area is performed according to the recipe. The divided area that does not reach the target temperature may correspond to a cooking shaded area in which cooking is performed at a relatively low cooking temperature despite setting the same cooking environment. The divided area that does not reach the target temperature may be an area that requires relatively more cooking time to reach the target temperature because the initial temperature is relatively low despite setting the same cooking environment.

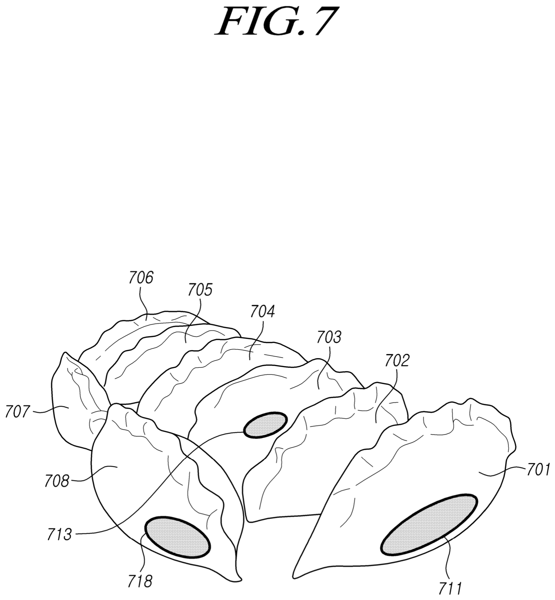

In operation 627, the cooking appliance 100 may determine whether there is an area that does not reach the target temperature among the divided areas. When there is an area that does not reach the target temperature, in operation 629, the cooking appliance 100 may generate a cooking state image in which the corresponding area is displayed as an area requiring additional cooking in the image of the target cooking thing 200 (see FIG. 7). The cooking appliance 100 may output the cooking state image through the internal display. The cooking appliance 100 may transfer the cooking state image to the external device 1230 and output the cooking state image through the display of the external device 1230.

When there is no area that fails to reach the target temperature, the cooking appliance 100 may determine whether a cooking termination event occurs in operation 631. The cooking termination event may occur when the termination of the cooking operation is requested by the user. The cooking termination event may occur when cooking of the target cooking thing 200 is completed.

The cooking appliance 100 may proceed to operation 623 in response to the cooking termination event not occurring or the cooking state image being generated, and may repeat the above-described operations. When the cooking termination event occurs, the cooking appliance 100 may terminate the cooking operation for the target cooking thing 200 in operation 633 and may inform the user that the cooking operation has been terminated.

FIG. 7 is a view illustrating an example in which a cooking appliance (e.g., the cooking appliance 100 of FIG. 1) displays an area requiring additional cooking on an image of a cooking thing (e.g., the cooking thing 200 of FIG. 2) according to an embodiment.

Referring to FIG. 7, the cooking appliance 100 may detect areas 711, 713, and 718, which are relatively less-cooked, based on surface temperatures of the target cooking things 701, 702, 703, 704, 705, 706, 707, 708, and 709 (e.g., several dumplings) measured by at least one thermal image sensor (e.g., the non-contact temperature sensor 211 and 213 of FIG. 2) while the cooking of the target cooking things 701, 702, 703, 704, 705, 706, 707, 708, and 709 is being performed.

The cooking appliance 100 may generate a virtual cooking thing image in which the detected sensed areas (e.g., areas 711, 713, and 718) are displayed on the image of the target cooking things 701, 702, 703, 704, 705, 706, 707, 708, and 709. The cooking appliance 100 may output the virtual cooking thing image through the internal display. The cooking appliance 100 may transfer the virtual cooking thing image to the external device 1230 and output the virtual cooking thing image through the display of the external device 1230.

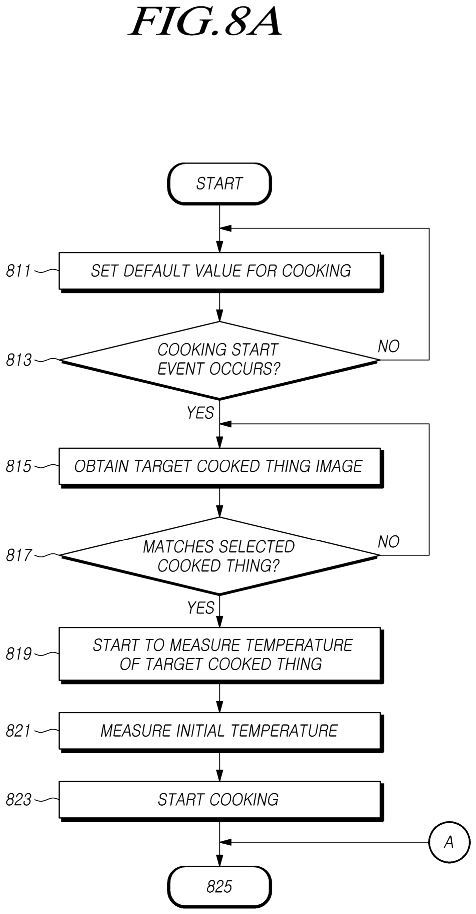

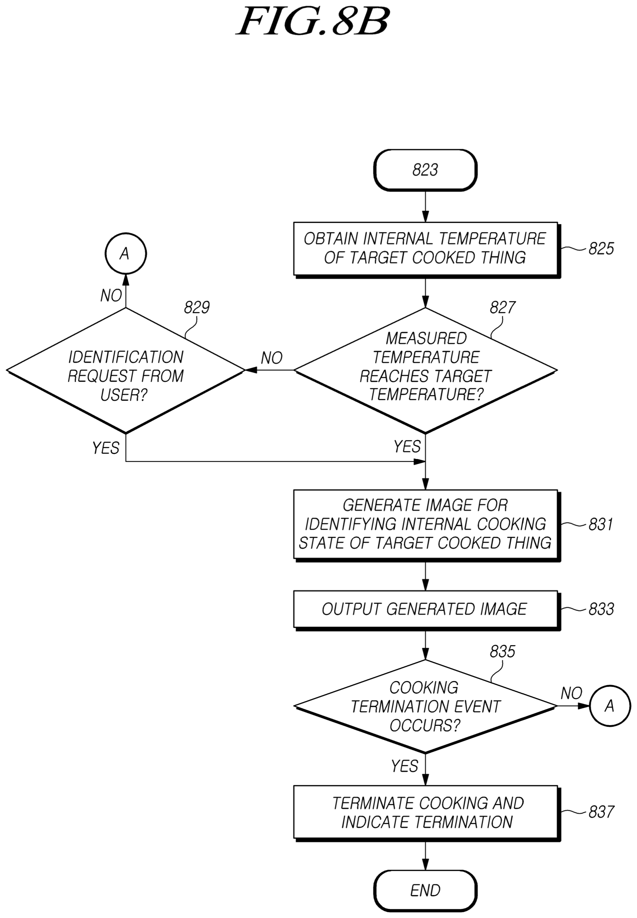

FIGS. 8A and 8B are views illustrating an example for providing a virtual cross-sectional image of a cooking thing (e.g., the cooking thing 200 of FIG. 2) in a cooking appliance (e.g., the cooking appliance 100 of FIG. 1) according to an embodiment of.

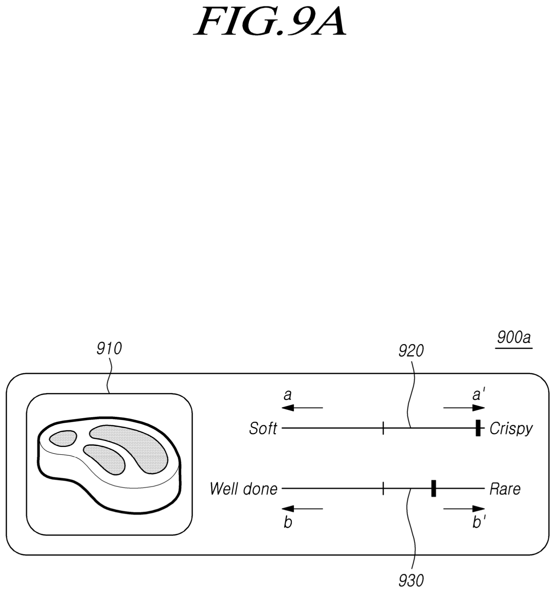

Referring to FIG. 8A or 8B, in operation 811, the cooking appliance 100 may set a default value for cooking the cooking thing 200. The default value may be set based on a reference guide (or a reference recipe). The default value may include a reference cooking temperature and/or a reference cooking time. The reference guide (or reference recipe) to be considered for setting the default value may be determined using, for example, a vision sensor (e.g., the vision sensor 215 of FIG. 2) included in the at least one non-contact sensor. The reference guide may be determined considering the type and/or thickness, and size of the cooking thing 200. The default value may be set directly by the user. The cooking appliance 100 may output a user interface (e.g., see FIG. 9A) through which the user may set the default value. For example, the user may set the default value for the cooking thing 200 by dividing the default value into an inside or an outside.

In operation 813, the cooking appliance 100 may monitor whether a cooking start event occurs. The cooking start event may be generated by a cooking start request by the user. The cooking appliance 100 may maintain a state in which the default value for cooking may be set until the cooking start event occurs.

When the cooking start event occurs, the cooking appliance 100 may obtain a target cooking thing image in operation 815. For example, the cooking appliance 100 may predict the type and/or size or thickness of the cooking thing 200 based on the information about the shape of the cooking thing 200 obtained by the vision sensor 215. The cooking appliance 100 may generate an image of the cooking thing 200 based on the predicted result.

In operation 817, the cooking appliance 100 may determine whether the cooking thing obtained (e.g., selected) when setting the default value matches the cooking thing sensed (e.g., predicted) using the vision sensor 215. For example, when the cooking thing of the recipe does not match the cooking thing obtained by sensing, the cooking appliance 100 may repeatedly perform operation 815.

In operation 819, the cooking appliance 100 may initiate temperature measurement by a thermal image sensor (e.g., the non-contact temperature sensors 211 and 213 of FIG. 2) to measure the internal temperature and/or surface temperature of the target cooking thing 200. In other words, the sensing operation of at least one thermal image sensor (e.g., the non-contact temperature sensors 211 and 213 of FIG. 2) included in the at least one non-contact sensor for measuring the surface temperature of the target cooking thing 200 may be started.

In operation 821, the cooking appliance 100 may measure the initial temperature of the target cooking thing 200 using the at least one thermal image sensor 211 or 213. The initial temperature may be measured because the cooking environment may vary according to the cooking time and/or the cooking temperature according to the initial state (e.g., the frozen state, the refrigerated state, the defrost state, or the like) of the target cooking thing 200.

In operation 823, the cooking appliance 100 may start cooking the target cooking thing 200 by applying the previously determined cooking environment. The cooking may be started by controlling the operation of a heater provided in the cooking appliance 100.

In operation 825, the cooking appliance 100 may obtain the internal temperature and/or the surface temperature of the target cooking thing 200. The cooking appliance 100 may sense the surface temperature of the target cooking thing 200 using the non-contact temperature sensors 211 and 213. The cooking appliance 100 may predict the internal temperature based on the sensed surface temperature.

In operation 827, the cooking appliance 100 may determine whether the measured temperature (e.g., the internal temperature or the surface temperature) of the target cooking thing 200 reaches the target temperature. This may be to determine whether the cooking of the target cooking thing 200 is performed according to the recipe.

When the measured temperature of the target cooking thing does not reach the target temperature, in operation 829, the cooking appliance 100 may determine whether there is the user's identification request. The identification request may be a request for identification of the virtual cross-sectional image corresponding to the cooking progress state of the target cooking thing 200. When the user's identification request is not detected, the cooking appliance 100 may proceed to operation 825 and may repeat the above-described operation.

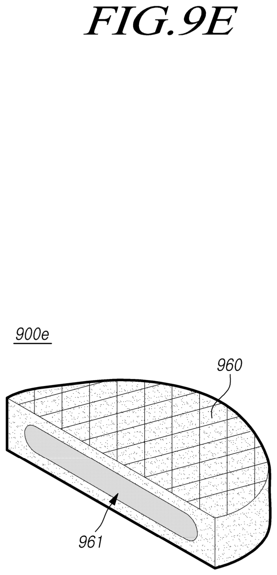

When the user's identification request is detected, the cooking appliance 100 may generate a virtual cross-sectional image (e.g., see FIG. 9E) for identifying an internal cooking progress state of the target cooking thing 200 in operation 831. In operation 833, the cooking appliance 100 may output the generated virtual cross-sectional image through the display.

In operation 835, the cooking appliance 100 may determine whether a cooking termination event occurs. The cooking termination event may occur when the termination of the cooking operation is requested by the user. The cooking termination event may occur when cooking of the target cooking thing 200 is completed.

When the cooking termination event does not occur, the cooking appliance 100 may proceed to operation 825 and may repeat the above-described operation. When the cooking termination event occurs, the cooking appliance 100 may terminate the cooking operation for the target cooking thing 200 in operation 837 and may inform the user that the cooking operation has been terminated.

FIG. 9A is a view illustrating an example of a user interface for controlling a cooking environment of a cooking thing (e.g., the cooking thing 200 of FIG. 2) in a cooking appliance (e.g., the cooking appliance 100 of FIG. 1) according to an embodiment.

Referring to FIG. 9A, the user interface 900a output by the cooking appliance 100 to control the cooking environment of the cooking thing 200 may include a cooking thing image 910 and/or level adjustment bars (e.g., a first level adjustment bar 920 and a second level adjustment bar 930) for adjusting the level for each characteristic for cooking of the cooking thing 200. For example, the level adjustment bars may include a first level adjustment bar 920 for adjusting a soft or crispy ratio with respect to the texture of the cooking thing 200. For example, the level adjustment bars may include a second level adjustment bar 930 for adjusting the degree of cooking (e.g., well done or rare) of the cooking thing 200. The level adjustment bars (e.g., the first level adjustment bar 920 and the second level adjustment bar 930) may be adjusted by a touch and drag method by the user. The level adjustment bars (e.g., the first level adjustment bar 920 and the second level adjustment bar 930) may be adjusted before starting cooking or may be adjusted during cooking. The cooking appliance 100 may change (e.g., a degree of grilling, a degree of cooking, a visual, or the like) the cooking thing image 910 included in the user interface 900a in response to the adjustment of the level adjustment bars (e.g., the first level adjustment bar 920 and the second level adjustment bar 930). The adjustment of the level adjustment bars (e.g., the first level adjustment bar 920 and the second level adjustment bar 930) may be automatically performed based on a preferred recipe based on an artificial intelligence function.

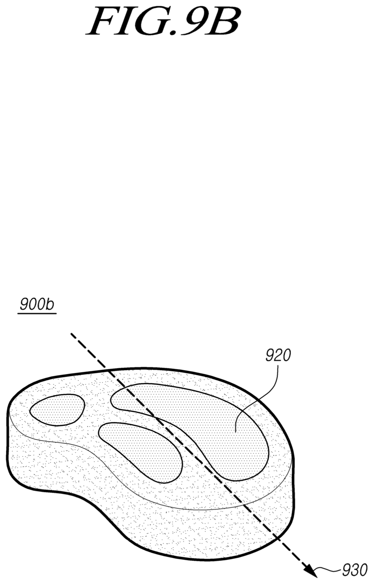

FIGS. 9B to 9E are example views for providing a cross-sectional image of a cooking thing (e.g., the cooking thing 200 of FIG. 2) in a cooking appliance (e.g., the cooking appliance 100 of FIG. 1) according to an embodiment of.

Referring to FIGS. 9B to 9E, the cut line 935 for the cooking thing 937 may be determined to obtain a cross section for predicting the internal temperature of the cooking thing 937 from the cooking thing image 900b displayed on the display (see FIG. 9B). The cooking appliance 100 may predict the internal temperature of the cooking thing 937 based on the cut line 935 based on the surface temperature of the cooking thing 937 sensed by at least one thermal image sensor (e.g., the non-contact temperature sensors 211 and 213 of FIG. 2). The cooking appliance 100 may generate a virtual cross-sectional image 900c by projecting the predicted internal temperature onto the cooking thing image 940. In the virtual cross-sectional image 900c, it may be identified that the internal temperature 943 near the center is relatively lower than the internal temperature 941 near the outer periphery.

The cooking appliance 100 may pre-register the reference cross-sectional images 951, 953, 955, 957, and 959 for each cooking progress state that may be classified based on the internal temperature (see FIG. 9D). The cooking appliance 100 may select the reference cross-sectional image corresponding to the cooking progress state (e.g., rare, medium rare, medium, medium well, or well done) according to the predicted internal temperature from among the pre-registered reference cross-sectional images 951, 953, 955, 957, and 959. For example, when the internal temperature corresponds to a degree indicating that the cooking is in a cooking progress state of about medium rare, the cooking appliance 100 may select the reference cross-sectional image 957 corresponding to medium rare from among pre-registered reference cross-sectional images 951, 953, 955, 957, and 959.

The cooking appliance 100 may obtain a virtual cross-sectional image 900e including identification information 961 indicating the cooking progress state of the cooking thing 200 by reflecting (e.g., projecting) the selected reference cross-sectional image onto the cooking thing image 960 (e.g., which may be generated based on a sensing signal by the vision sensor 215). The identification information 961 may be one from among color temperature, text, and brightness indicating the degree of internal cooking of the cooking thing.

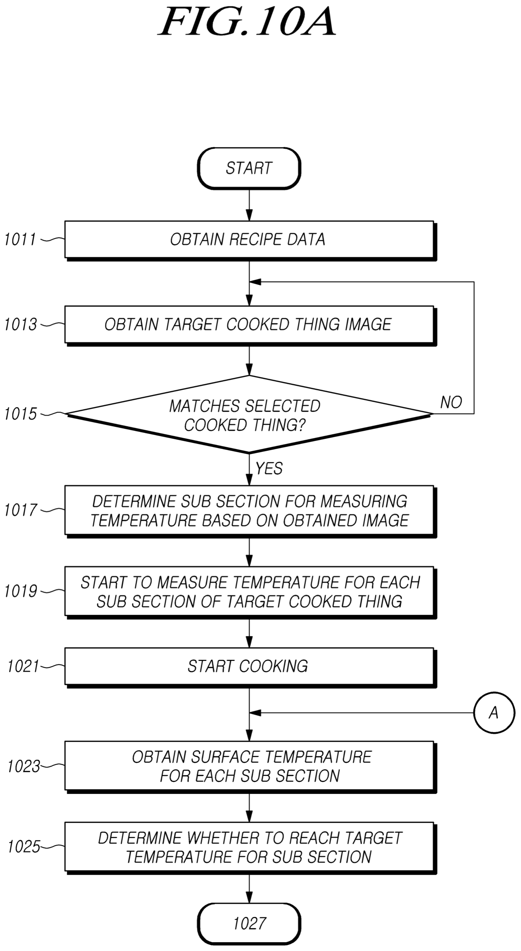

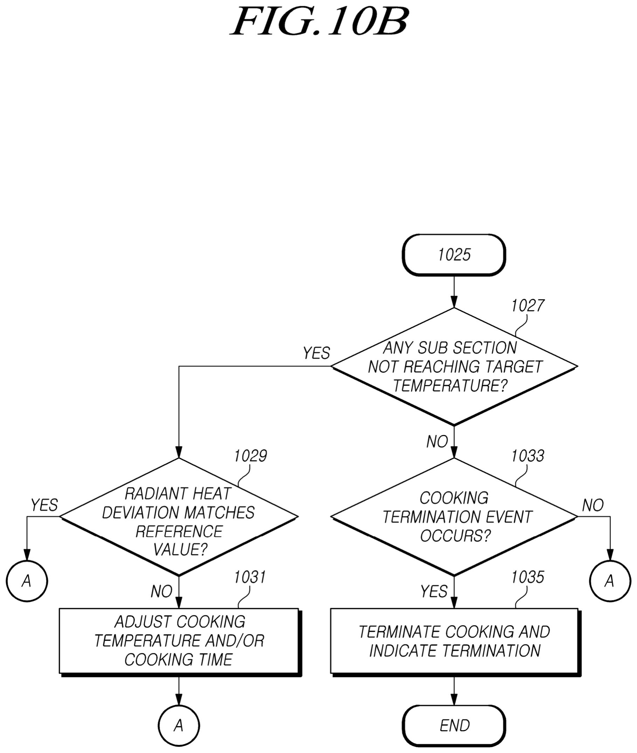

FIGS. 10A and 10B are control flowcharts for applying a cooking environment to each partial area of a cooking thing (e.g., the cooking thing 200 of FIG. 2) in a cooking appliance (e.g., the cooking appliance 100 of FIG. 1) according to an embodiment.

Referring to FIG. 10A and 10B, in operation 1011, the cooking appliance 100 may obtain recipe data for cooking the cooking thing 200. The cooking appliance 100 may obtain pre-registered recipe data corresponding to the cooking thing 200 from the database DB for managing the recipe. The cooking appliance 100 may obtain a barcode corresponding to the cooking thing 200 or obtain recipe data corresponding to the cooking thing 200 from a registered user manual. The cooking appliance 100 may transfer information about the cooking thing 200 to an external device (e.g., the external device 1230 of FIG. 12) or a server (e.g., the server 1220 of FIG. 12), and may receive recipe data from the external device 1230 or the server 1220 in response thereto.

In operation 1013, the cooking appliance 100 may obtain an image of the target cooking thing 200 by at least one vision sensor (e.g., the vision sensor 215 of FIG. 2) included in the at least one non-contact sensor. When the cooking appliance 100 fails to obtain the image of the target cooking thing 200 using the vision sensor 215, the cooking appliance 100 may request and receive information about the target cooking thing 200 from the user.

In operation 1015, the cooking appliance 100 may determine whether the cooking thing obtained based on the recipe matches the target cooking thing. When the cooking thing obtained based on the recipe does not match the target cooking thing, the cooking appliance 100 may repeatedly perform operation 1013.

In operation 1017, the cooking appliance 100 may determine a sub section for temperature measurement based on the image obtained for the target cooking thing 200. For example, the cooking appliance 100 may divide the target cooking thing 200 into a predetermined area. The predetermined area may be divided considering cooking ingredients distributed in the target cooking thing 200. For example, the area of the target cooking thing 200 may be divided considering the positions of cooking ingredients to which a similar cooking environment may be applied. The sub section may be determined based on an area having a size in which it is easy to apply a common cooking environment in the cooking appliance 100.

In operation 1019, the cooking appliance 100 may obtain an internal temperature and/or a surface temperature for each sub section determined for the target cooking thing 200. The cooking appliance 100 may start measuring the temperature for each sub section determined for the target cooking thing 200. In other words, the sensing operation of at least one thermal image sensor (e.g., the non-contact temperature sensors 211 and 213 of FIG. 2) included in the at least one non-contact sensor for measuring the surface temperature of the target cooking thing 200 may be started. The cooking appliance 100 may automatically set a cooking environment for cooking for each sub section of the target cooking thing 200 based on the cooking manual, i.e., the obtained recipe. The cooking environment may be determined by setting, for example, a cooking temperature and/or a cooking time for cooking for each sub section of the target cooking thing 200. When the automatic setting of the cooking environment fails, the cooking appliance 100 may set a cooking environment reflecting the intention of the user by interacting with the user.

In operation 1021, the cooking appliance 100 may start cooking the target cooking thing 200 by applying the cooking environment. The cooking may be started by controlling the operation of a heater provided in the cooking appliance 100. In this case, cooking may be performed in a different cooking environment for each sub section in the target cooking thing 200. The cooking appliance 100 may determine a preferred cooking environment among the sub sections, and start cooking the entire target cooking thing 200 based on the preferred cooking environment. This makes it possible to obtain a result to an overall preferred degree of cooking for the cooking thing 200.

In operation 1023, the cooking appliance 100 may obtain an internal temperature and/or a surface temperature for each sub section of the target cooking thing 200. The cooking appliance 100 may sense the surface temperature of each sub section of the target cooking thing 200 using the non-contact temperature sensors 211 and 213. The cooking appliance 100 may predict the internal temperature in the corresponding sub section based on the surface temperature sensed for each sub section. The cooking appliance 100 may not sense the internal temperature and/or surface temperature of the target cooking thing 200 for each sub section. This may be applied when the target cooking thing 200 is cooked according to a preferred cooking environment.

In operation 1025, the cooking appliance 100 may determine whether the internal temperature or the surface temperature measured in the corresponding sub section reaches the target temperature for each sub section. This may be to determine whether the cooking of the cooking ingredients included in the corresponding sub section is performed according to the recipe. The sub section that does not reach the target temperature may correspond to a cooking shaded area in which cooking is performed at a relatively low cooking temperature despite setting the same cooking environment. The sub section that does not reach the target temperature may be an area in which a relatively high cooking time is required to reach the target temperature due to a relatively low initial temperature despite setting the same cooking environment.

In operation 1027, the cooking appliance 100 may determine whether there is a sub section that does not reach the target temperature among the sub sections. When there is a sub section that does not reach the target temperature, the cooking appliance 100 may determine whether the radiant heat deviation matches the reference value in operation 1029. When the radiant heat deviation matches the reference value, the cooking appliance 100 may return to operation 1023 and repeat the above-described operation. When the radiant heat deviation does not match the reference value, the cooking appliance 100 may change the cooking environment by adjusting the cooking temperature and/or the cooking time. When the cooking environment is changed, the cooking appliance 100 may return to operation 1023 and may repeat the above-described operation.

When there is no subsection that fails to reach the target temperature, the cooking appliance 100 may determine whether a cooking termination event occurs in operation 1033. The cooking termination event may occur when the termination of the cooking operation is requested by the user. The cooking termination event may occur when cooking of the target cooking thing 200 is completed.

When the cooking termination event does not occur, the cooking appliance 100 may proceed to operation 1023 and may repeat the above-described operation. When the cooking termination event occurs, the cooking appliance 100 may terminate the cooking operation for the target cooking thing 200 in operation 1035 and may inform the user that the cooking operation has been terminated.

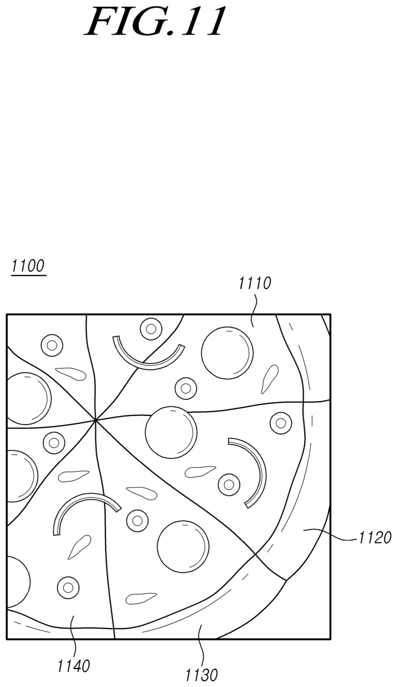

FIG. 11 illustrates an example in which an image 1100 of a cooking thing (e.g., the cooking thing 200 of FIG. 2) is divided to detect an area requiring additional cooking in a cooking appliance (e.g., the cooking appliance 100 of FIG. 1) according to an embodiment.

Referring to FIG. 11, the cooking appliance 100 may detect relatively less cooked sub sections based on surface temperatures of the sub sections 1110, 1120, 1130, and 1140 measured by at least one thermal image sensor (e.g., the non-contact temperature sensors 211 and 213 of FIG. 2) while cooking of the target cooking thing (e.g., pizza) is being performed.

The cooking appliance 100 may change the cooking environment by adjusting the cooking temperature and/or the cooking time considering the detected less-cooked sub section, and perform additional cooking on the target cooking thing by applying the changed cooking environment.

FIG. 12 is an example view illustrating an environment 1200 for controlling a cooking appliance (e.g., the cooking appliance 100 of FIG. 1) according to various embodiments.

Referring to FIG. 12, the cooking operation for the cooking thing 200 may be performed based on the environment 1200 in which the cooking appliance 1210, the server 1220, and/or the external device 1230 is connected through the network 1240 to communicate with each other.

The cooking appliance 1210 may include at least one sensor (e.g., the non-contact temperature sensors 211 and 213 and/or the vision sensor 215 of FIG. 2) to capture a cooking thing (e.g., the cooking thing 200 of FIG. 2) including ingredients before, after, or after cooking is performed.

The cooking appliance 1210 may be configured to control a cooking operation so that the cooking thing 200 may be cooked according to a desired recipe based on the surface state of the cooking thing 200, the surface temperature, and/or the internal temperature predicted based on the surface temperature through the captured image of the cooking thing 200.

The cooking appliance 1210 may allow the user to directly input a cooking condition to cook the cooking thing 200. Alternatively, the cooking appliance 1210 may allow the user to cook the cooking thing 200 using a wireless communication function as a type of an embedded system. For example, the cooking appliance 1210 may receive a cooking command from the external device 1230 and/or the server 1220 to perform a cooking operation. The cooking appliance 1210 may include, for example, an appliance such as an electric oven, a microwave cook-top, or an air fryer. The user of the cooking appliance 1210 may set or change a cooking environment (e.g., a cooking time, a cooking temperature, and/or a cooking method) according to his/her taste. The cooking appliance 1210 may include an artificial intelligence (AI) function capable of cooking the cooking thing 200 according to the user's recipe, i.e., a cooking environment. Otherwise, the server 1220 may be implemented to include an AI function to control the cooking appliance 1210 according to the cooking thing 200. The control for cooking the cooking thing 200 may be remotely controlled through the external device 1230 without the user directly manipulating the cooking appliance 1210. Data may be transmitted/received to/from the server 1220, which is a learning device, through a network 1240 (e.g., a public network such as a 5G network or a private network such as a short-range wireless communication network (e.g., Wi-Fi)) connecting the cooking appliance 1210, the server 1220, and/or the external device 1230.

The cooking appliance 1210 may use a program related to various AI algorithms stored in the server 1220 and the local area in the process of generating, learn, evaluating, completing, and updating, by using the user's personal data, various AI models in relation to vision recognition capable of recognizing the cooking progress state image of the cooking thing 200 captured using at least one non-contact sensor (e.g., a thermal image sensor or a vision sensor), and an AI model for performing functions.

According to an embodiment, the cooking appliance 1210 may obtain at least one from among the type of the cooking thing 200 and the size information about the cooking thing 200 using a vision sensor (e.g., the vision sensor 215 of FIG. 2) which is one of at least one non-contact sensor before starting cooking of the cooking thing 200. The cooking appliance 100 may determine reference cross-sectional images 951, 953, 955, 957, and 959 pre-registered corresponding to the cooking thing 200 considering at least one from among the type of the cooking thing 200 and the size information about the cooking thing 200.

According to an embodiment, the cooking appliance 1210 may determine the internal temperature of the cooking thing 200 based on at least one surface temperature sensed on the surface of the cooking thing 200 using a thermal image sensor (e.g., the non-contact temperature sensor 1213-2 of FIG. 2) which is one of the at least one non-contact sensor. The cooking appliance 100 may obtain the reference cross-sectional image corresponding to the determined internal temperature among reference cross-sectional images (e.g., the reference cross-sectional images 951, 953, 955, 957, and 959) pre-registered for each cooking progress state of the cooking thing 200 as a virtual cross-sectional image 900e for feeding back the cooking progress state of the cooking thing 200. The cooking appliance 100 may output the virtual cross-sectional image 900e to the internal display, the external device 1230, and/or the server 1220. The cooking progress state may be classified by the degree of internal cooking of the cooking thing 200 that changes as cooking of the cooking thing 200 progresses. The reference cross-sectional images 951, 953, 955, 957, and 959 may include identification information indicating the degree of internal cooking according to the cooking progress state. The identification information may be defined by one of color temperature, text, or brightness indicating the degree of internal cooking.

According to an embodiment, the cooking appliance 100 may identify an uncooked portion of the cooking thing 200 based on the determined internal temperature. The cooking appliance 100 may generate a virtual cooking thing image by displaying the uncooked portion on the image of the cooking thing 200 obtained using the vision sensor 215, which is one of the at least one non-contact sensor. The cooking appliance 100 may output the virtual cooking thing image to the internal display, the external device 1230, and/or the server 1220.

According to an embodiment, the cooking appliance 100 may obtain a cooking complete image corresponding to the user's preferred recipe from among cooking complete images pre-registered for each recipe of the cooking thing 200, and output the obtained cooking complete image as a virtual cooking complete image. The cooking appliance 100 may output the virtual cooking complete image to the internal display, the external device 1230, and/or the server 1220. The cooking appliance 100 may selectively output the virtual cross-sectional image and/or the virtual cooking complete image according to the user setting.

According to an embodiment, the cooking appliance 100 may identify the cooking ingredients of the cooking thing 200 in the vision image obtained using the vision sensor 215, which is one of the at least one non-contact sensor. The cooking appliance 100 may set a cooking temperature and/or a cooking time for cooking a cooking ingredient whose temperature increases rapidly by heating among the identified cooking ingredients as a setting value for cooking the cooking thing 200. As an example, the cooking appliance 100 may divide the surface of the cooking thing 200 into a plurality of sectors, and may differently apply a cooking environment based on at least one from among the cooking temperature and the cooking time for each sector.

According to an embodiment, the cooking appliance 100 may determine one of a plurality of cooking modes as a selected cooking mode considering characteristics according to at least one from among the type of the cooking thing 200 and the size information about the cooking thing 200. The plurality of cooking modes may include, for example, layer mode, custom mode, in & out mode, and/or scale mode.

According to an embodiment, the cooking appliance 100 may obtain the area selected by the user from the virtual cross-sectional image or the virtual cooking thing image, and may change the cooking environment based on at least one from among the cooking temperature and the cooking time for the selected area.

The external device 1230 may include user equipment and/or an artificial intelligence (AI) assistant speaker including a capturing function. The artificial intelligence speaker may be a device that serves as a gateway in home automation. The external device 1230 may include a mobile phone, a projector, a mobile phone, a smart phone, a laptop computer, a digital broadcasting electronic device, a personal digital assistant (PDA), a portable multimedia player (PMP), a navigation device, a slate PC, a tablet PC, an Ultra-book, a wearable device (e.g., a smartwatch, a glasses-type electronic device, or a head mounted display (HMD)), a set-top box (STB), a digital multimedia broadcasting (DMB) receiver, a radio, a washing machine, a refrigerator, a desktop computer, a fixed device such as digital signage, or a movable device. The external device 1230 may be implemented in the form of various home appliances used at home, and may also be applied to a robot that is fixed or movable.

The server 1220 may provide various services related to the AI model equipped in the cooking appliance 1210 in relation to the AI model. The server 1220 may provide various services for recognizing the cooking thing 200.

The server 1220 may collect training data for training various AI models, and train the AI model using the collected data. When various AI models trained by the server 1220 are completed through evaluation, the external device 1230 may use the various AI models, or the AI model itself may be a subject to perform human body recognition, face recognition, and object recognition.

The network 1240 may be any suitable communication network including a wired and wireless network such as, for example, a local area network (LAN), a wide area network (WAN), the Internet, an intranet and an extranet, and a mobile network such as, for example, a cellular network, a 3G network, an LTE network, a 5G network, a Wi-Fi network, an ad-hoc network, and a combination thereof.

The network 1240 may include connections of network elements such as a hub, a bridge, a router, a switch, and a gateway. The network 1240 may include one or more connected networks, such as a multi-network environment, including a public network such as the Internet and a private network such as a secure enterprise private network. Access to the network 1240 may be provided through one or more wired or wireless access networks.

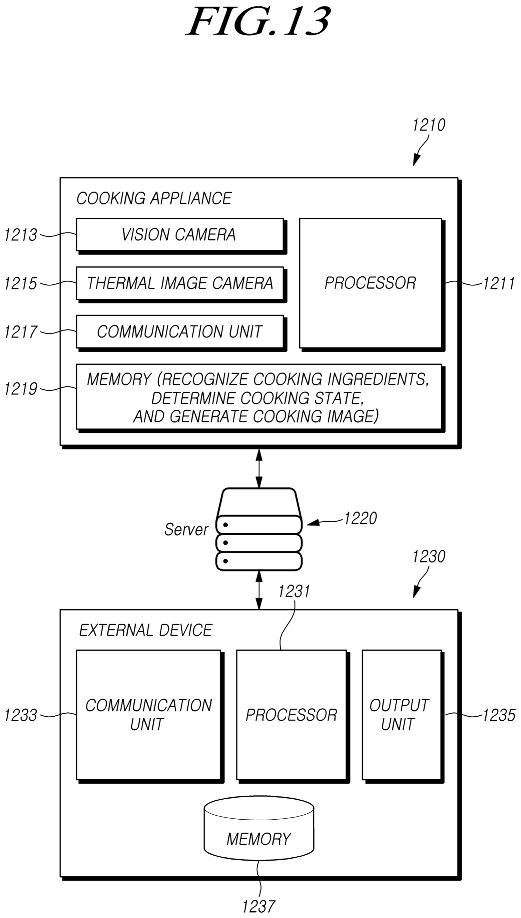

FIG. 13 is a block diagram illustrating an exmaple configuration of a cooking appliance (e.g., the cooking appliance 1210 of FIG. 12) and an external device (e.g., the external device 1230 of FIG. 12).

Referring to FIG. 13, the cooking appliance 1210 may include a main body (e.g., the main body 110 of FIG. 1), a communication unit 1217, at least one sensor, memory 1219, and/or a processor 1211. According to embodiments, the cooking appliance 1210 may include a user interface (UI) (e.g., the front panel 130 of FIG. 1) and/or a heater.

The main body 110 may form an exterior of the cooking appliance 1210, and may include a space (e.g., the cavity 140 of FIG. 1) in which a cooking thing (e.g., the cooking thing 200 of FIG. 2) may be disposed. The main body 110 may be formed in various shapes according to conditions of the cooking appliance 1210, and embodiments of the present disclosure are not limited by the shape of the main body 110.

The communication unit 1217 may support establishing a direct (e.g., wired) communication channel and/or a wireless communication channel with the server 1220 (e.g., the server 1220 of FIG. 12) and/or the external device 1230 connected via a network (e.g., the network 1240 of FIG. 12), and performing communication via the established communication channel. The communication unit 1217 may include one or more communication processors that are operated independently of the processor 1211 and support direct (e.g., wired) communication and/or wireless communication. The communication unit 1217 may include a wireless communication module (e.g., a cellular communication module, a short-range wireless communication module, and/or a global navigation satellite system (GNSS) communication module) and/or a wired communication module (e.g., a local area network (LAN) communication module or a power line communication module). The communication unit 1217 may communicate with the server 1220 and/or the external device 1230 via, for example, a short-range communication network (e.g., Bluetooth, wireless fidelity (Wi-Fi) direct, or infrared data association (IrDA)) and/or a long-range network 1299 (e.g., a legacy cellular network, a 5G network, a next-generation communication network, the Internet, or a computer network (e.g., LAN or WAN). For example, the communication unit 1217 may identify or authenticate the cooking appliance 1210 and/or the external device 1230 in the network 1240 using subscriber information (e.g., international mobile subscriber identity (IMSI)).

The communication unit 1217 may support a post-4G 5G network and next-generation communication technology such as, for example, new radio (NR) access technology. The NR access technology may support enhanced mobile broadband (eMBB), massive machine type communications (mMTC), and/or ultra-reliable and low-latency communications (URLLC). The communication unit 1217 may support, for example, a high frequency band (e.g., mmWave band) to achieve a high data transmission rate. The communication unit 1217 may support various requirements specified in the cooking appliance 1210, the external device 1230, and/or the network 1240. As an example, the communication unit 1217 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The at least on sensor may capture the cooking thing 200 cooked in the main body 110. When capturing the cooking thing 200, the at least one sensor may capture the surface of the cooking thing 200, the internal temperature of the cooking thing 200, and the surface temperature of the cooking thing 200. For example, the at least one sensor may include a vision camera 1213 for capturing the surface state of the cooking thing 200 and/or a thermal image camera 1215 for extracting temperature information about the cooking thing 200. The vision camera 1213 and the thermal image camera 1215 may be installed inside or/and outside the cooking appliance 1210. When the vision camera 1213 and the thermal image camera 1215 are installed inside the cooking appliance 1210, the vision camera 1213 and the thermal image camera 1215 may be configured to withstand a high temperature inside the cooking appliance 1210 in order to prevent an operation failure due to a high temperature that occurs when the cooking appliance 1210 is operated.

The cooking thing image or the cooking progress state image obtained through the at least one sensor may be used to determine the cooking state of the cooking thing 200. The processor 1211 may control the heater to cook the cooking thing to correspond to a predetermined cooking condition according to the cooking state of the cooking thing 200 based on the cooking thing image or the cooking progress state image obtained through the at least one sensor.

Specifically, the at least one sensor (or the processor 1211) may determine the type of the cooking thing 200 by applying an object classification neural network (object classifier) to the surface image of the cooking thing 200 captured by the vision camera 1213. The vision camera 1213 captures the exterior, color, etc., of the cooking thing 200. The image of the cooking thing 200 captured by the vision camera 1213 and the surface image of the cooking thing 200 stored in the database provided in the memory 1219 are matched through learning, and the matched cooking thing information (e.g., cooking thing type) is extracted. A preferred recipe for cooking the cooking thing 200 may be determined based on the extracted cooking thing information.

The processor 1211 may analyze a change in the surface of the cooking thing 200 by the image captured by the vision camera 1213 to predict the type, the cooking step, or the like of the cooking thing 200. As described above, the vision camera 1213 may capture the surface of the cooking thing 200. The type of the cooking thing 200, that is captured, may be determined based on the learned information. Alternatively, even the same cooking thing 200 may have different cooking conditions. For example, even when the surface of the instant rice is captured, cooking may be performed with different cooking conditions for the cooking thing 200 depending on the brand of the instant rice, the presence or absence of some cooked areas, etc. Accordingly, the processor 1211 may be trained to predict the cooking state of the cooking thing 200 through the image of the surface of the cooking thing 200 captured by the vision camera 1213, and may set different conditions in cooking the cooking thing 200 according to the feature of the change in the surface of the cooking thing 200 based on the trained conditions.

The vision camera 1213 may capture an image of the cooked cooking thing. In other words, it may be determined whether the cooking thing 200 is properly cooked by capturing the surface of the cooking thing image for which the cooking is completed. To that end, the at least one sensor (or the processor 1211) may determine the cooking progress state through a change in the surface of the cooking thing 200 on which cooking is being performed based on the cooked cooking thing image.

The at least one sensor (or the processor 1211) may identify the internal temperature and the surface temperature of the cooking thing 200 based on the cooking progress state image captured by the thermal image camera 1215. The thermal image camera 1215 is a device capable of visually identifying the temperature of an object by tracking and sensing heat. The processor 1211 may identify the internal temperature and/or surface temperature of the cooking thing 200 to determine whether the cooking thing 200 has been cooked. In particular, the pixel value of each of the virtual cooking thing images representing the cooking progress state may be quantified to analyze the internal temperature and/or surface temperature of the cooking thing 200, and then the cooking state of the cooking thing 200 may be determined. As described above, the thermal image camera 1215 may capture an image showing an internal temperature and/or a surface temperature of the cooking thing 200. For example, even if the cooking things of the captured cooking thing 200 are the same, the cooking thing may be cooked differently according to the cooking time and the cooking condition. In other words, when cooking is performed with different conditions, the internal temperature and/or surface temperature of the cooking thing 200 may be measured as different after cooking. Based on this, the processor 1211 may predict the internal temperature and/or surface temperature of the cooking thing 200 based on the internal temperature and the external image of the cooking thing 200 captured by the thermal image camera 1215, and determine how much the cooking thing 200 is cooked by the predicted internal temperature and surface temperature, whether additional cooking is required, or the like.

The thermal image camera 1215 may also capture an image of the cooking thing that has been cooked. In other words, an image based on the internal temperature and/or the surface temperature of the cooking thing image may be captured to generate or output a virtual cross-sectional image for determining whether the cooking thing 200 is properly cooked.

As described above, the camera that captures the image of the cooking thing 200 is for inputting image information (or a signal), audio information (or a signal), data, or information input from the user, and may include one or more cameras inside or outside the cooking appliance 1210 to input image information.

Meanwhile, a video, an image, or the like of the cooking thing 200 obtained by the camera may be processed as a frame. The frame may be displayed on the display or stored in the memory 1219.

The memory 1219 may store information about the cooking thing 200, image information according to the cooking thing 200, surface temperature and/or internal temperature of the cooking thing 200, external thermal image information, cooking information about the cooking thing 200, and the like, and may store a program corresponding to the cooking information.

The memory 1219 may store the cooking time of the cooking thing 200, additional cooking condition information, and the like, that are input by the user. The memory 1219 may store personal information about the user using the cooking appliance 1210. The user's personal information may be, for example, information such as the user's fingerprint, face, iris, and/or the like. The user's personal information may be referenced to cook the cooking thing 200 according to the user's preference. The memory 1219 stores data supporting various functions of the cooking appliance 1210.

Specifically, the memory 1219 may store a plurality of application programs or applications running on the cooking appliance 1210, data for the operation of the cooking appliance 1210, and instructions, and data for the operation of the learning processor 1211 (e.g., at least one algorithm information for machine learning).

The memory 1219 may store the model trained by the processor 1211 or the like, which is described below. The memory 1219 may store the trained model with the model separated into a plurality of versions according to the learning time point, the learning progress, and/or the like. The memory 1219 may store input data obtained from the camera, learning data (or training data) used for model training, the training history of the model, and/or the like. The input data stored in the memory 1219 may be unprocessed input data itself as well as data processed appropriately for model training.

Various computer program modules may be loaded in the memory 1219. In its range, the computer program loaded in the memory 1219 may be implemented as an application program as well as the operating system and a system program for managing hardware.

The processor 1211 may obtain at least one from among the type of the cooking thing 200 and the size information about the cooking thing 200 using the vision camera 1213 (e.g., the vision sensor 215 of FIG. 2), which is one of the at least one non-contact sensor, before starting cooking of the cooking thing 200. The processor 1211 may determine reference cross-sectional images 951, 953, 955, 957, and 959 pre-registered corresponding to the cooking thing 200 considering at least one from among the type of the cooking thing 200 and the size information about the cooking thing 200.

The processor 1211 may determine the internal temperature of the cooking thing 200 based on at least one surface temperature sensed on the surface of the cooking thing 200 using the thermal image camera 1215 (e.g., the non-contact temperature sensor 111, 213 of FIG. 2), which is one of the at least one non-contact sensor. The processor 1211 may obtain a reference cross-sectional image corresponding to the determined internal temperature among reference cross-sectional images (e.g., the reference cross-sectional images 951, 953, 955, 957, and 959) pre-registered for each cooking progress state of the cooking thing 200 as the virtual cross-sectional image 900e for feeding back the cooking progress state of the cooking thing 200. The processor 1211 may output the virtual cross-sectional image 900e to the internal display, the external device 1230, and/or the server 1220. The cooking progress state may be classified by the degree of internal cooking of the cooking thing 200 that changes as cooking of the cooking thing 200 progresses. The reference cross-sectional images 951, 953, 955, 957, and 959 may include identification information indicating the degree of internal cooking according to the cooking progress state. The identification information may be defined by one from among color temperature, text, and brightness indicating the degree of internal cooking.

The processor 1211 may identify an uncooked portion of the cooking thing 200 based on the determined internal temperature. The cooking appliance 100 may generate a virtual cooking thing image by displaying the uncooked portion on the image of the cooking thing 200 obtained using the vision camera 1213, which is one of the at least one non-contact sensor. The processor 1211 may output the virtual cooking thing image to the internal display, the external device 1230, and/or the server 1220.

The processor 1211 may obtain a cooking complete image corresponding to the user's preferred recipe from among cooking complete images pre-registered for each recipe of the cooking thing 200, and output the obtained cooking complete image as a virtual cooking complete image. The processor 1211 may output the virtual cooking complete image to the internal display, the external device 1230, and/or the server 1220. The processor 1211 may selectively output one of the virtual cross-sectional image or the virtual cooking complete image according to the user setting.

The processor 1211 may identify the cooking ingredients of the cooking thing 200 in the vision image obtained using the vision camera 1213, which is one of the at least one non-contact sensor. The processor 1211 may set a cooking temperature and/or a cooking time for cooking a cooking ingredient whose temperature increases rapidly by heating among the identified cooking ingredients as a setting value for cooking the cooking thing 200. As an example, the processor 1211 may divide the surface of the cooking thing 200 into a plurality of sectors, and may differently apply a cooking environment based on at least one from among the cooking temperature and the cooking time for each sector.

The processor 1211 may determine one of a plurality of cooking modes as a selected cooking mode considering characteristics according to at least one from among the type of the cooking thing 200 and the size information about the cooking thing 200. The plurality of cooking modes may include, for example, layer mode, custom mode, in & out mode, and/or scale mode.

The processor 1211 may obtain the area selected by the user from the virtual cross-sectional image or the virtual cooking thing image, and may change the cooking environment based on at least one from among the cooking temperature and the cooking time for the selected area.

According to an embodiment, the external device 1230 may include a communication unit 1233, an output unit 1235, memory 1237, and/or a processor 1231. The communication unit 1233 may receive a cooking command generated by the cooking appliance 1210 or the server 1220. The communication unit 1233 may be communicatively connected with the server 1220 and the cooking appliance 1210 using, e.g.,, for example, a short-range communication module such as Bluetooth and/or a wireless LAN, for example, a Wi-Fi module.

The output unit 1235 may display a cooking process of the cooking thing 200 performed by the cooking appliance 1210. The user may directly execute the cooking condition of the cooking thing 200 in the external device 1230. To that end, the cooking condition of the cooking thing 200 may be stored in the external device 1230, and the cooking condition of the cooking thing 200 may be executed by an input unit). For example, the cooking condition according to the cooking thing 200 may be searched, and when the external device 1230 selects and inputs the cooking condition for the cooking thing as a result of the search, the cooking appliance 1210 may be operated based on the input cooking thing 200 to allow the cooking thing 200 to be cooked.

The cooking condition of the cooking thing 200 may be stored in the memory 1237. The cooking condition of the cooking thing 200 may be learned by the processor 1231, and when the cooking thing 200 is visible to the camera, the cooking condition corresponding to the cooking thing 200 may be input through the input unit, and then the cooking appliance 1210 may cook the cooking thing 200 according to the cooking condition.

Meanwhile, the external device 1230 may also be equipped with a trained model. Such a trained model may be implemented by hardware, software, or a combination of hardware and software, and when some or all of the trained models are implemented by software, one or more instructions constituting the trained model may be stored in any one of the processors.

FIGS. 14A to 14C are views illustrating an example of installing a non-contact sensor (e.g., the non-contact temperature sensors 211 and 213 and the vision camera (e.g., the vision sensor 215 of FIG. 2)) in a cooking appliance (e.g., the cooking appliance 100 of FIG. 1). In addition to the microwave oven illustrated in FIG. 1, the cooking appliance 100 may include a smart oven 1400a, a smart hood 1400b, or a smart alone product 1400c.

Referring to FIG. 14A, in order to output a cooking state of a cooking thing (e.g., the cooking thing 200 of FIG. 2) as an image, the smart oven 1400a may include a non-contact sensor on at least one of six surfaces (e.g., a front surface, a rear surface, a left surface, a right surface, an upper surface, or a lower surface) constituting an inner space (e.g., the cavity 140 of FIG. 1) in which the cooking thing 200 is placed for cooking. For example, in the smart oven 1400a, at least one non-contact temperature sensor 1413a and/or at least one vision sensor 1415a may be on the upper surface, and at least one non-contact temperature sensor 1411a may be on the left surface. In the drawings, an example in which one non-contact temperature sensor 1413a and one vision sensor 1415a are on the upper surface and two non-contact temperature sensors 1411a are on the left surface is illustrated, but embodiments of the present disclosure are not limited thereto. For example, at least one non-contact temperature sensor and/or at least one vision sensor may be on the lower surface, the front surface, the rear surface, and/or the right surface. Further, when the inner space (e.g., the cavity 140 of FIG. 1) is divided into three or more spaces, at least one non-contact temperature sensor and/or at least one vision sensor may be configured for each of the three or more divided spaces.

Referring to FIG. 14B, in order to output a cooking state of a cooking thing (e.g., the cooking thing 200 of FIG. 2) as an image, the smart hood 1400b may have a structure in which the cooking thing 200 is placed on the bottom surface for cooking. In this case, the smart hood 1400b may include a non-contact sensor on its lower surface to face the bottom surface on which the cooking thing 200 is placed. For example, at least one non-contact temperature sensor 1411b and/or at least one vision sensor 1415b may be on the lower surface of the smart hood 1400b. The drawings illustrate an example in which two non-contact temperature sensors 1411b and one vision sensor 1415b are on the lower surface of the smart hood 1400b, but embodiments of the present disclosure are not limited thereto. For example, at least one non-contact temperature sensor and/or at least one vision sensor may be independently provided outside the smart hood 1400b. Further, when there are a plurality of positions where the cooking thing 200 may be placed on the bottom surface for cooking purposes, the smart hood 1400b may include at least one non-contact temperature sensor and/or at least one vision sensor for each of the plurality of positions.

Referring to FIG. 14C, in order to output a cooking state of a cooking thing (e.g., the cooking thing 200 of FIG. 2) as an image, a smart alone product 1400c may have a structure for cooking the cooking thing 200 placed on a bottom surface. In this case, the smart alone product 1400c may include a non-contact sensor to face the bottom surface on which the cooking thing 200 is placed. For example, the smart alone product 1400c may include at least one non-contact temperature sensor 1411c and/or at least one vision sensor 1415c that faces the cooking thing 200. In the drawings, an example in which one non-contact temperature sensor 1411c and one vision sensor 1415c are included in the smart alone product 1400c is illustrated, but embodiments of the present disclosure are not limited thereto. For example, at least one non-contact temperature sensor and/or at least one vision sensor may be independently provided outside the smart alone product 1400c. Further, when there are a plurality of positions where the cooking thing 200 may be placed on the bottom surface for cooking purposes, the smart alone product 1400c may include at least one non-contact temperature sensor and/or at least one vision sensor for each of the plurality of positions.

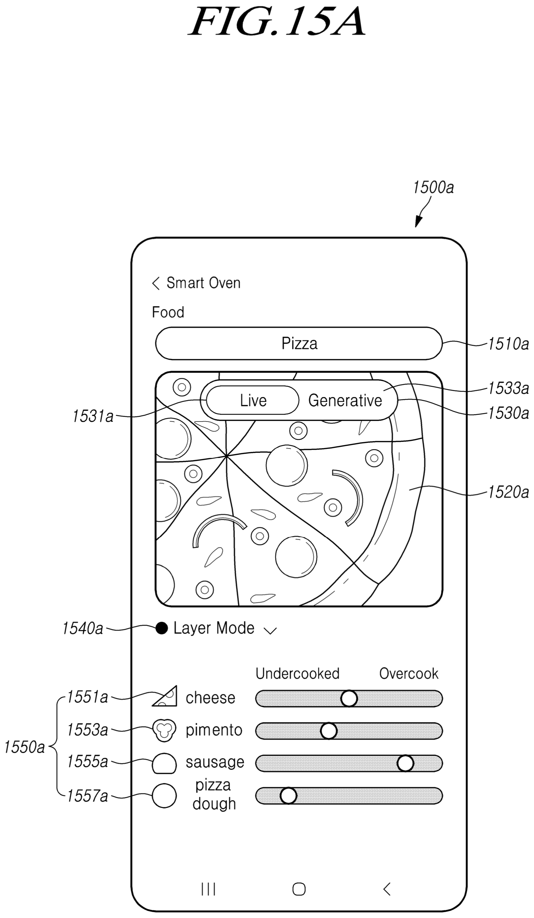

FIGS. 15A to 15F are views illustrating an example of the user interface (UI) for controlling a cooking process of a cooking thing (e.g., the cooking thing 200 of FIG. 2) in an external device (e.g., the external device 1230 of FIG. 12) according to an embodiment.

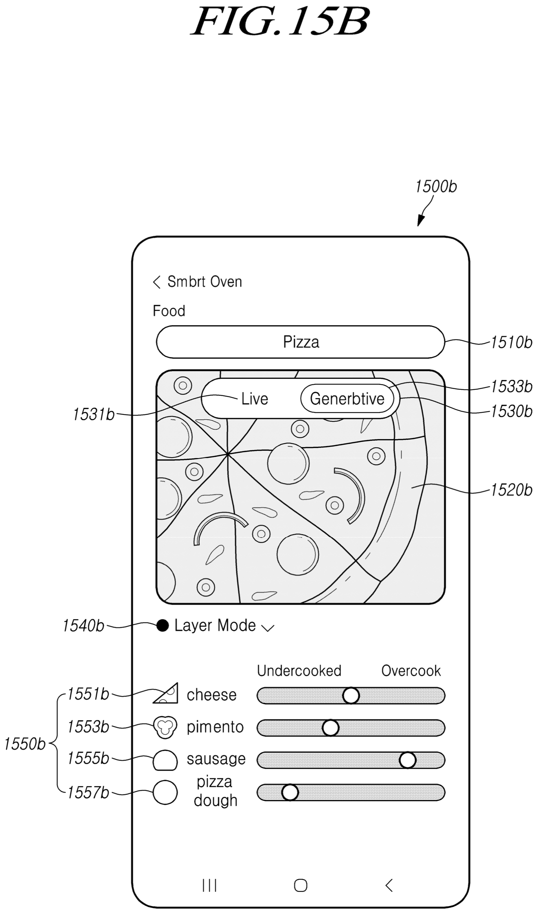

Referring to FIG. 15A and FIG. 15B, the external device 1230 may selectively output one of a virtual cooking thing image (e.g., FIG. 7) or a virtual cooking complete image according to the user setting. The virtual cooking thing image may be an image of the cooking thing 200 expected at a current time point while cooking is in progress. The virtual cooking complete image may be an image of the cooking thing 200 expected at the time point at which cooking is completed while cooking is in progress. For example, the UI screens 1500a and 1500b output by the external device 1230 may include information 1510a and 1510b (e.g., the text "Pizza") indicating the type of the cooking thing 200, cooking thing images 1520a and 1520b, image selection icons 1530a and 1530b, cooking mode selection icons 1540a and 1540b (e.g., layer mode), and/or cooking environment adjustment icons 1550a and 1550b.

The image selection icons 1530a and 1530b may include live selection icons (Live) 1531a and 1531b for displaying a virtual cooking thing image (or a cooking progress state image) corresponding to the state of the cooking thing 200 at a current time point at which cooking is currently being performed. When the live selection icons (Live) 1531a and 1531b are activated, the external device 1230 may display, as a virtual cooking thing image, a cooking progress state image at a current time point as the cooking thing images 1520a and 1520b (see FIG. 15A).

The image selection icons 1530a and 1530b may include completion selection icons (Generative) 1533a and 1533b for displaying a virtual cooking complete image corresponding to a state of the cooking thing 200 expected at a time point at which cooking is completed. When the completion selection icons (Generative) 1533a and 1533b are activated, the external device 1230 may display, as the cooking thing images 1520a and 1520b, a virtual cooking complete image that is a virtual cooking thing image expected in the completion state (see FIG. 15B).

The cooking environment adjustment icons 1550a and 1550b included in the UI screens 1500a and 1500b output by the external device 1230 may include at least one level adjustment bar 1551a, 1553a, 1555a, 1557a, 1551b, 1553b, 1555b, and 1557b for adjusting the cooking state (e.g., undercooked or overcooked) for each cooking ingredient included in the cooking thing 200 or the cooking thing 200. For example, the cooking environment adjustment icons 1550a and 1550b may include level adjustment bars 1551a, 1553a, 1555a, 1557a, 1551b, 1553b, 1555b, 1555b, and 1557b for adjusting the degree of cooking of each of cheese, bell pepper, sausage, or pizza dough included in the cooking ingredients for pizza. The user may manipulate the level adjustment bars 1551a, 1553a, 1555a, 1557a, 1551b, 1553b, 1555b, and 1557b provided for each of the cooking ingredients to control to complete the cooking thing 200 in which each of the cooking ingredients is cooked to the desired level.

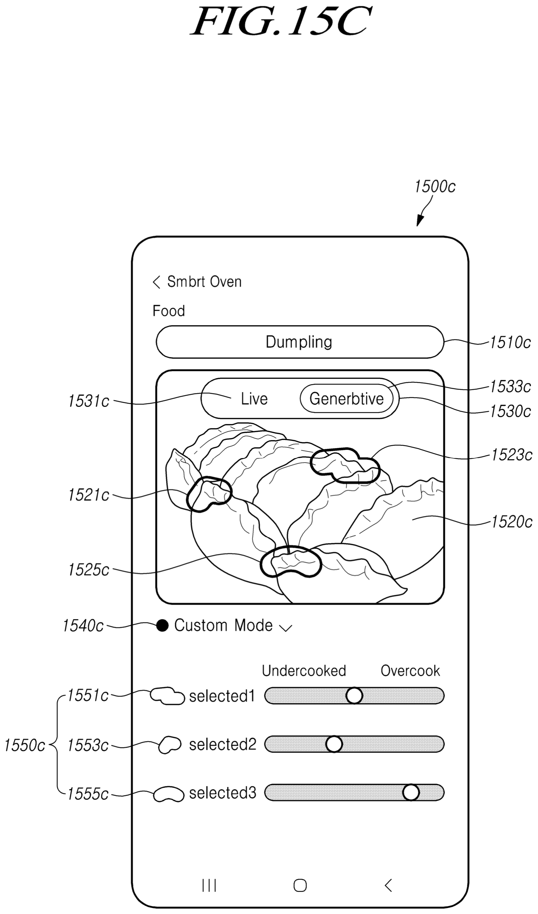

Referring to FIG. 15C, the external device 1230 may selectively output one from among a virtual cooking thing image (e.g., FIG. 7) and a virtual cooking complete image according to the user setting. For example, the UI screen 1500c output by the external device 1230 may include information 1510c (e.g., the text "Dumpling") indicating the type of the cooking thing 200, a cooking thing image 1520c, an image selection icon 1530c, a cooking mode selection icon 1540c (e.g., custom mode), and/or a cooking environment adjustment icon 1550c.

The image selection icon 1530c may include a live selection icon (Live) 1531c for displaying a virtual cooking thing image (or a cooking progress state image) corresponding to the state of the cooking thing 200 at a current time point at which cooking is currently being performed. When the live selection icon (Live) 1531c is activated, the external device 1230 may display, as a virtual cooking thing image, a cooking progress state image at a current time point as the cooking thing image 1520c.

The image selection icon 1530c may include a completion selection icon (Generative) 1533c for displaying a virtual cooking complete image corresponding to a state of the cooking thing 200 expected at a time point at which cooking is completed. When the completion selection icon (Generative) 1533c is activated, the external device 1230 may display, as the cooking thing image 1520c, a virtual cooking complete image that is a virtual cooking thing image expected in the completion state.

Specific portions 1521c, 1523c, and 1525c that are determined not to be cooked to the desired level in the virtual cooking image or the virtual cooking complete image included in the UI screen 1500c output by the external device 1230 may be selected by the user. This may be performed based on a method in which the external device 1230 supports interaction with the user. For example, the specific portions 1521c, 1523c, and 1525c may be selected by a method in which the user touches the screen.

The cooking environment adjustment icon 1550c included in the UI screen 1500c output by the external device 1230 may include at least one level adjustment bar 1551c, 1553c, and 1555c for adjusting the cooking state (e.g., undercooked or overcooked) for each specific portion 1521c, 1523c, and 1525c. For example, when three selected portions 1521c, 1523c, and 1525c are selected as uncooked portions by the user, the cooking environment adjustment icon 1550c may include level adjustment bars 1551c, 1553c, and 1555c for adjusting the degree of cooking of each of the specific portions 1521c, 1523c, and 1525c corresponding to the three portions. The user may manipulate the level adjustment bars 1551c, 1553c, and 1555c provided for each of the specific portions 1521c, 1523c, and 1525c to control to complete the cooking thing 200 in which each of the specific portions 1521c, 1523c, and 1525c is cooked to the desired level.

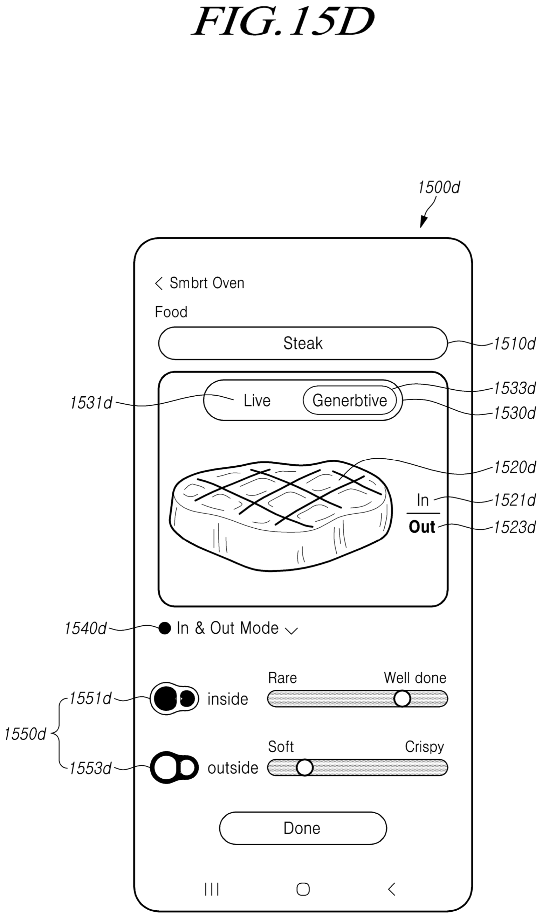

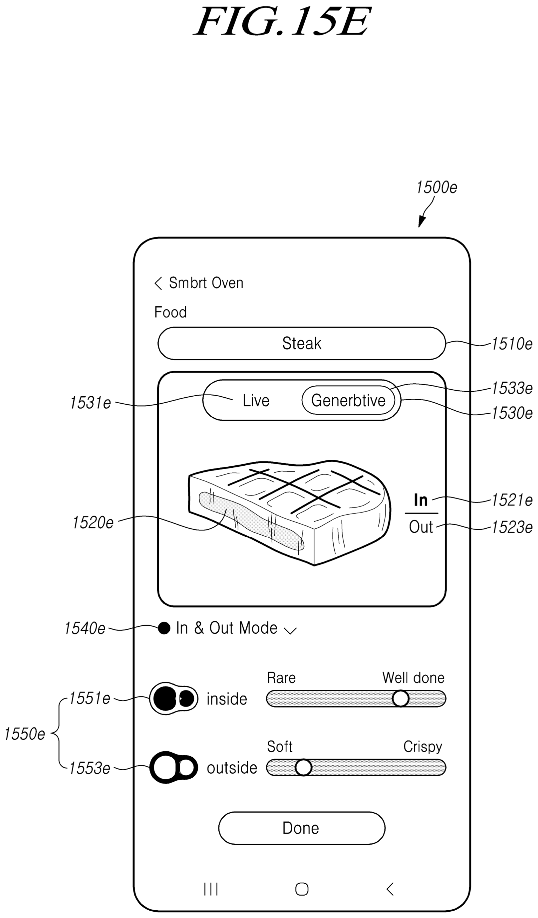

Referring to FIG. 15D and FIG. 15E, the external device 1230 may selectively output a virtual image, which is one of a virtual cooking thing image (e.g., FIG. 7) or a virtual cooking complete image, from a virtual surface image and/or a virtual cross-sectional image according to the user's setting. The virtual surface image may be a virtual image capable of viewing the entire surface state of the cooking thing 200 expected at a current time point at which cooking is in progress or at a time point at which cooking is completed. The virtual cross-sectional image may be a virtual image capable of viewing a cross-sectional state of the cooking thing 200 expected at a current time point at which cooking is in progress or at a time point at which cooking is completed. For example, the UI screens 1500d and 1500e output by the external device 1230 may include information 1510d and 1510e (e.g., the text "Steak") indicating the type of the cooking thing 200, cooking thing images 1520d and 1520e, output portion selection icons (In 1521d and 1521e or Out 1523d and 1523e), image selection icons 1530d and 1530e, cooking mode selection icons 1540d and 1540e (e.g., In & Out Mode), and/or cooking environment adjustment icons 1550d and 1550e.

The image selection icons 1530d and 1530e may include live selection icons (Live) 1531d and 1531e for displaying a virtual cooking thing image (or a cooking progress state image) corresponding to the state of the cooking thing 200 at a current time point at which cooking is currently being performed. When the live selection icons (Live) 1531d and 1531e are activated, the external device 1230 may display, as a virtual cooking thing image, a cooking progress state image at a current time point as the cooking thing images 1520d and 1520e.

The image selection icons 1530d and 1530e may include completion selection icons (Generative) 1533d and 1533e for displaying a virtual cooking complete image corresponding to a state of the cooking thing 200 expected at a time point at which cooking is completed. When the completion selection icons (Generative) 1533d and 1533e are activated, the external device 1230 may display, as the cooking thing images 1520d and 1520e, a virtual cooking complete image that is a virtual cooking thing image expected in the completion state.

The output portion selection icons may include first selection icons ("Out" 1523d and 1523e) for displaying a virtual cooking thing image (or a cooking progress state image) corresponding to the state of the cooking thing 200 at the current time point at which cooking is currently being performed or a virtual cooking complete image corresponding to the state of the cooking thing 200 expected at the time point at which cooking is completed so that the entire surface of the cooking thing 200 appears. When the first selection icon ("Out" 1523d and 1523e) is activated, the external device 1230 may display a cooking progress state image or a virtual cooking complete image (e.g., the cooking thing image 1520d) so that the state of cooking of the entire surface of the cooking thing 200 appears (see FIG. 15D).

The output portion selection icons may include a second selection icon ("In" 1521d and 1521e) to display a virtual cooking thing image (or a cooking progress state image) corresponding to the state of the cooking thing 200 at a current time point at which cooking is currently being performed or a virtual cooking complete image corresponding to the state of the cooking thing 200 expected at a time point at which cooking is completed so that the cross section of the cooking thing 200 appears. When the second selection icon ("In" 1521d or 1521e) is activated, the external device 1230 may display a cooking progress state image or a virtual cooking complete image (e.g., the cooking thing image 1520e) so that a cross-sectional state of the cooking thing 200 appears (see FIG. 15E).

The cooking environment adjustment icons 1550d and 1550e included in the UI screens 1500d and 1500e output by the external device 1230 may include at least one level adjustment bar 1551d and 1553d or 1551e and 1553e for adjusting the degree of cooking (e.g., rare or well done) for each of the inside or outside of the cooking thing 200. For example, the cooking environment adjustment icons 1550d and 1550e may include level adjustment bars 1551d and 1551e for adjusting the degree of cooking inside the steak. For example, the cooking environment adjustment icons 1550d and 1550e may include level adjustment bars 1553d and 1553e for adjusting the degree of cooking outside the steak. The user may control the level adjustment bars 1551d, 1553d, 1551e, and 1553e to complete the cooking thing 200 cooked inside or outside to the desired level.

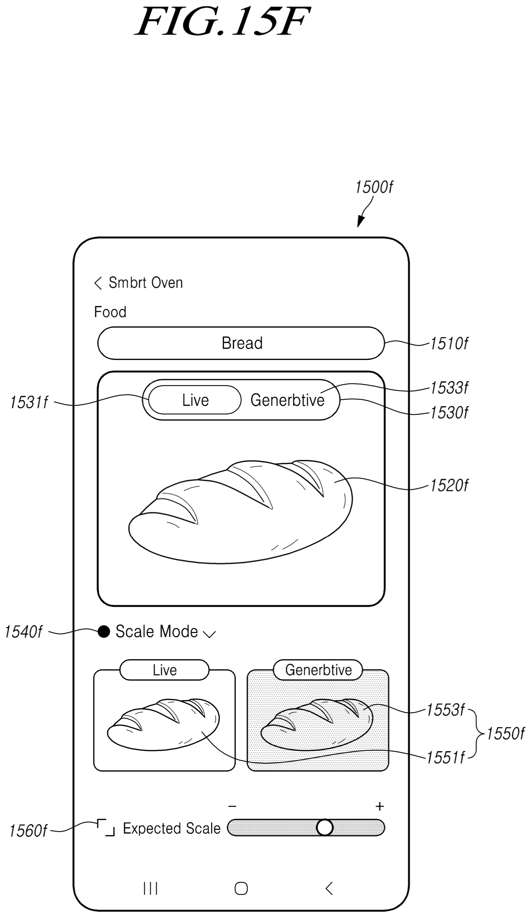

Referring to FIG. 15F, the external device 1230 may selectively output one from among a virtual cooking thing image (e.g., FIG. 7) and a virtual cooking complete image according to the user setting. For example, the UI screen 1500f output by the external device 1230 may include information 1510f (e.g., the text "Bread") indicating the type of the cooking thing 200, a cooking thing image 1520f, an image selection icon 1530f, a cooking mode selection icon 1540f (e.g., scale mode), a virtual cooking thing image 1551f, a virtual cooking complete image 1553f, and/or a cooking environment adjustment icon 1560f.

The image selection icon 1530f may include a live selection icon (Live) 1531f for displaying a virtual cooking thing image (or a cooking progress state image) corresponding to the state of the cooking thing 200 at a current time point at which cooking is currently being performed. When the live selection icon (Live) 1531f is activated, the external device 1230 may display, as a virtual cooking thing image, a cooking progress state image at a current time point as the cooking thing image 1520f.

The image selection icon 1530f may include a completion selection icon (Generative) 1533f for displaying a virtual cooking complete image corresponding to a state of the cooking thing 200 expected at a time point at which cooking is completed. When the completion selection icon (Generative) 1533f is activated, the external device 1230 may display, as the cooking thing image 1520f, a virtual cooking complete image that is a virtual cooking thing image expected in the completion state.

The external device 1230 may include the virtual cooking thing image 1551f and the virtual cooking complete image 1553f in the UI screen 1500f, thereby enabling the user to identify how it is changed at the time when the cooking thing 200 is completed.

The cooking environment adjustment icon 1560f included in the UI screen 1500f output by the external device 1230 may include a level adjustment bar for adjusting the expected degree of cooking (expected scale) of the cooking thing 200. The user may control to complete the cooking thing 200 cooked to the desired level by manipulating the level adjustment bar.

In the above-described various embodiments, a UI provided through the display of the external device 1230 has been described, but a UI for controlling the cooking process of the cooking thing 200 may also be provided through the display included in the cooking appliance (e.g., the cooking appliance 1210 of FIG. 12).

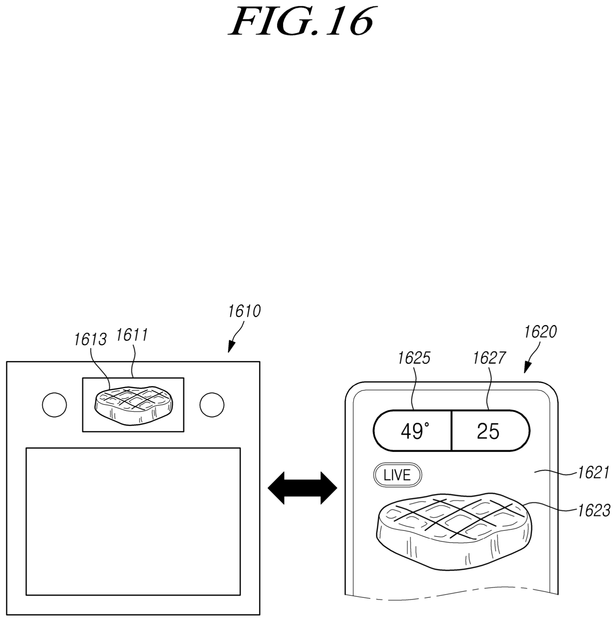

FIG. 16 is a view illustrating an example of synchronizing a cooking progress state image based on cooking progress information shared between a cooking appliance (e.g., the cooking appliance 1210 of FIG. 12) and an external device (e.g., the external device 1230 of FIG. 12), according to an embodiment.

Referring to FIG. 16, the cooking appliance 1610 may obtain cooking state information about a cooking thing (e.g., the cooking thing 200 of FIG. 2) that is being cooked, based on a sensing signal of at least one non-contact sensor (e.g., the non-contact temperature sensors 211 and 213 and/or the vision sensor 215 of FIG. 2). The cooking state information may be used to predict, for example, a virtual cooking state image that is an image indicating the current cooking progress state of the cooking thing 200. The cooking appliance 1610 may transfer the obtained cooking state information to the external device 1620.

The cooking appliance 1610 may obtain the virtual cooking state image indicating the current cooking progress state of the cooking thing 200 using the obtained cooking state information. For example, the cooking appliance 1610 may select one of reference cross-sectional images or reference cooking complete images that are databased through learning based on the cooking state information. The reference cross-sectional images may include identification information indicating the degree of internal cooking according to the cooking progress state. The identification information may be one from among color temperature, text, and brightness indicating the degree of internal cooking. The reference cooking complete images may include identification information indicating the degree of external (surface or outer surface) cooking according to the cooking progress state. The identification information may be one from among the color temperature, the text, and the brightness indicating the degree of external cooking. The cooking appliance 1610 may output the obtained virtual cooking state image 1613 through the internal display 1611.

The external device 1620 may obtain a virtual cooking state image indicating the current cooking progress state of the cooking thing 200 using the cooking state information received from the cooking appliance 1610. For example, the external device 1620 may select one from among reference cross-sectional images and reference cooking complete images that are databased through learning based on the cooking state information. The reference cross-sectional images may include identification information indicating the degree of internal cooking according to the cooking progress state. The identification information may be one from among color temperature, text, and brightness indicating the degree of internal cooking. The reference cooking complete images may include identification information indicating the degree of external (surface or outer surface) cooking according to the cooking progress state. The identification information may be one from among the color temperature, the text, and the brightness indicating the degree of external cooking. The external device 1620 may output the obtained virtual cooking state image 1623 through the internal display 1621. In addition to the virtual cooking state image 1623, the external device 1620 may display the temperature 1625 (e.g., 49 degrees) of the cooking thing 200 and/or the remaining cooking time 1627 (e.g., 25 minutes).

For example, the external device 1620 may directly receive the virtual cooking state image from the cooking appliance 1610. For example, the external device 1620 may transfer the virtual cooking state image obtained using the cooking state information received from the cooking appliance 1610 to the cooking appliance 1610.

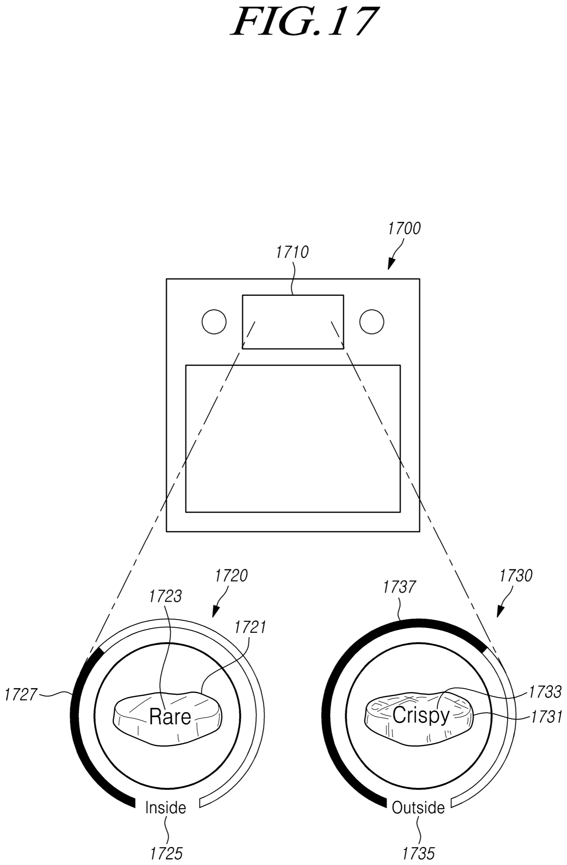

FIG. 17 is a view illustrating an example of a user interface for controlling a degree of cooking of a cooking thing (e.g., the cooking thing 200 of FIG. 2) in a cooking appliance (e.g., the cooking appliance 100 of FIG. 1).

Referring to FIG. 17, the cooking appliance 1700 may output a user interface for adjusting a recipe (e.g., a degree of cooking) of the cooking thing 200 through the internal display 1710. For example, the cooking appliance 1700 may output, through the internal display 1710, at least one from among a first user interface 1720 for adjusting the degree of cooking on the inside of the cooking thing 200 and a second user interface 1730for adjusting the degree of cooking on the outside of the cooking thing 200.

For example, the cooking appliance 1700 may output, through the internal display 1710, a first user interface screen 1720 including a cross-sectional image 1721 of a cooking thing completely cooked in response to a recipe set for the cooking thing 200. The first user interface screen 1720 may include information 1723 (e.g., the text "Rare") indicating the recipe (a degree of cooking) set to obtain the cross-sectional image 1721 of the cooking thing. The first user interface screen 1720 may include a ring-shaped adjustment bar 1727 capable of adjusting the degree of cooking inside the cooking thing 200. The adjustment bar 1727 may have a form capable of identifying that the degree of internal cooking 1725 of the degree of rare is set.

For example, the cooking appliance 1700 may output, through the internal display 1710, a second user interface screen 1730 including the entire image 1731 of a cooking thing completely cooked in response to a recipe set for the cooking thing 200. The second user interface screen 1730 may include information 1733 (e.g., the text "Crispy") indicating the recipe (a degree of cooking) set to obtain the entire image 1731 of the cooking thing. The second user interface screen 1730 may include a ring-shaped adjustment bar 1737 capable of adjusting the degree of cooking outside the cooking thing 200. The adjustment bar 1737 may have a form capable of identifying that the degree of external cooking 1735 of the degree of crispy is set.

The above-described example provides a method of adjusting the recipe (e.g., the degree of cooking) of the cooking thing 200 in the cooking appliance 100, but is not limited thereto, and embodiments of the present disclosure may include a user interface capable of adjusting the recipe (e.g., the degree of cooking) of the cooking thing 200 being cooked in the cooking appliance 100 by an external device (e.g., the external device 1230 of FIG. 12).

As an example, a cooking appliance (e.g., the cooking appliance 100, the cooking appliance 1210, the smart oven 1400a, the smart hood 1400b, or the smart alone product1400c) may comprise a main body 110, memory 1219 including one or more storage media storing instructions, at least one non-contact sensor (e.g., the vision camera 1213 and/or the thermal image camera 1215), and at least one processor 1211 including a processing circuit. The cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, determine an internal temperature of a cooking thing 200 based on at least one surface temperature sensed on a surface of the cooking thing 200 by a non-contact temperature sensor (e.g., the thermal image camera 1215), which is one of the at least one non-contact sensor (e.g., the vision camera 1213 and/or the thermal image camera 1215). The cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, obtain a reference cross-sectional image corresponding to the internal temperature among reference cross-sectional images 951, 953, 955, 957, 959 corresponding to a cooking progress state, as a virtual cross-sectional image 900e of the cooking thing 200. The cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, output the virtual cross-sectional image 900e. The cooking progress state may be divided by a degree of internal cooking of the cooking thing 200 that changes as the cooking of the cooking thing 200 progresses. The reference cross-sectional images 951, 953, 955, 957, 959 may include identification information 961 indicating the degree of internal cooking of the cooking thing 200 according to the cooking progress state.

As an example, the cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, obtain at least one from among a type of the cooking thing 200 and size information about the cooking thing 200 using a vision sensor (e.g., the vision camera 123), which is one of the at least one non-contact sensor (e.g., the vision camera 1213 and/or the thermal image camera 1215). The cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, determine the reference cross-sectional images 951, 953, 955, 957, 959 corresponding to the cooking thing 200 considering at least one from among the type of the cooking thing 200 and the size information about the cooking thing 200.

As an example, the identification information 961 may be one from among a color temperature, a text, and a brightness.

As an example, the cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, identify an uncooked portion of the cooking thing 701 to 708 based on the internal temperature. The cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, display the uncooked portion (e.g., areas 711, 713, and 715) on an image of the cooking thing 701 to 708 obtained using a vision sensor (e.g., the vision camera 1213), which is one of the at least one non-contact sensor (e.g., the vision camera 1213 and/or the thermal image camera 1215) and output as a virtual cooking thing image (FIG. 7).

As an example, the cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, obtain a cooking complete image corresponding to a preferred recipe from cooking complete images corresponding to a recipe of the cooking thing 200. The cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, output the cooking complete image as a virtual cooking complete image.

As an example, the cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, selectively output one from among the virtual cross-sectional image 900e and the virtual cooking complete image.

As an example, the cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, identify cooking ingredients of the cooking thing 200 in a vision image obtained using a vision sensor (e.g., the vision camera 1213) which is one of the at least one non-contact sensor (e.g., the vision camera 1213 and/or the thermal image camera 1215). The cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, set a cooking temperature and/or a cooking time for cooking a cooking ingredient that increases in temperature relatively fast by heating among cooking ingredients to a setting value for cooking the cooking thing 200.

As an example, the cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, divide a surface of the cooking thing 200 into a plurality of sectors and apply a different cooking environment based on at least one from among the cooking temperature and the cooking time for each sector.

As an example, the cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, determine, as a selection cooking mode, one of a plurality of cooking modes considering a characteristic according to at least one from among a type of the cooking thing 200 and size information about the cooking thing 200.

As an example, the cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, obtain a partial area from the virtual cross-sectional image 900e or the virtual cooking thing image (FIG. 7). The cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, change a cooking environment based on at least one from among a cooking temperature and a cooking time for the partial area.

As an example, the cooking appliance (e.g., the cooking appliance 100, the cooking appliance 1210, the smart oven 1400a, the smart hood 1400b, or the smart alone product1400c) may be configured to, when the instructions are executed individually or collectively by the at least one processor 1211, transfer the virtual cross-sectional image 900e to an external device 300.

According to an example, a method for controlling a cooking appliance (e.g., the cooking appliance 100, the cooking appliance 1210, the smart oven 1400a, the smart hood 1400b, or the smart alone product1400c) may comprise determining an internal temperature of a cooking thing 200 based on at least one surface temperature sensed on a surface of the cooking thing 200 by a non-contact temperature sensor (e.g., thermal image camera 1215), which is one of at least one non-contact sensor (e.g., the vision camera 1213 and/or the thermal image camera 1215). The control method may comprise obtaining a reference cross-sectional image corresponding to the internal temperature among reference cross-sectional images 951, 953, 955, 957, 959 corresponding to a cooking progress state, as a virtual cross-sectional image 900e of the cooking thing 200. The control method may comprise outputting the virtual cross-sectional image 900e. The cooking progress state may be divided by a degree of internal cooking of the cooking thing 200 that changes as the cooking of the cooking thing 200 progresses. The reference cross-sectional images 951, 953, 955, 957, 959 may include identification information 961 indicating the degree of internal cooking of the cooking thing 200 according to the cooking progress state.

As an example, the control method may comprise obtaining at least one of a type of the cooking thing 200 and size information about the cooking thing 200 using a vision sensor (e.g., the vision camera 1213), which is one of the at least one non-contact sensor (e.g., the vision camera 1213 and/or the thermal image camera 1215). The control method may comprise determining the reference cross-sectional images 951, 953, 955, 957, 959 corresponding to the cooking thing 200 considering at least one of the type of the cooking thing 200 and/or the size information about the cooking thing 200.

As an example, the identification information 961 may be one of a color temperature, a text, or a brightness.

As an example, the control method may comprise identifying an uncooked portion of the cooking thing 701 to 708 based on the internal temperature. The control method may comprise displaying areas 711, 713, 715 of the uncooked portion on an image of the cooking thing 701 to 708 obtained using a vision sensor (e.g., the vision camera 1213), which is one of the at least one non-contact sensor (e.g., the vision camera 1213 and/or the thermal image camera 1215) and output as a virtual cooking thing image (FIG. 7).

As an example, the control method may comprise obtaining a cooking complete image corresponding to a preferred recipe from cooking complete images corresponding to a recipe of the cooking thing 200 and outputting the cooking complete image as a virtual cooking complete image.

As an example, the control method may comprise selectively output one of the virtual cross-sectional image 900e or the virtual cooking complete image.

As an example, the control method may comprise identifying cooking ingredients of the cooking thing 200 in a vision image obtained using a vision sensor (e.g., vision camera 1213) which is one of the at least one non-contact sensor (e.g., the vision camera 1213 and/or the thermal image camera 1215). The control method may comprise setting a cooking temperature and/or a cooking time for cooking a cooking ingredient that increases in temperature relatively fast by heating among cooking ingredients to a setting value for cooking the cooking thing 200.

As an example, the control method may comprise dividing a surface of the cooking thing 200 into a plurality of sectors and applying a different cooking environment based on at least one of the cooking temperature or the cooking time for each sector.

As an example, the control method may comprise determining, as a selection cooking mode, one of a plurality of cooking modes considering a characteristic according to at least one from among a type of the cooking thing 200 and size information about the cooking thing 200.

As an example, the control method may comprise obtaining a partial area from the virtual cross-sectional image 900e or the virtual cooking thing image (FIG. 7) and changing a cooking environment based on at least one from among a cooking temperature and a cooking time for the partial area.

As an example, the control method may comprise transferring the virtual cross-sectional image 900e to an external device 300.

According to an example, a non-transitory computer-readable storage medium individually or collectively executed by at least one processor 1211 of a cooking appliance (e.g., the cooking appliance 100, the cooking appliance 1210, the smart oven 1400a, the smart hood 1400b, or the smart alone product1400c) including at least one non-contact sensor (e.g., the vision camera 1213 and/or the thermal image camera 1215) may store one or more programs including instructions that, when executed by at least one processor, cause the at least one processor to perform the operations of determining an internal temperature of a cooking thing 200 based on at least one surface temperature sensed on a surface of the cooking thing 200 by a non-contact temperature sensor (e.g., the thermal image camera 1215), which is one of at least one non-contact sensor (e.g., the vision camera 1213 and/or the thermal image camera 1215), obtaining a reference cross-sectional image corresponding to the internal temperature among reference cross-sectional images 951, 953, 955, 957, 959 corresponding to a cooking progress state, as a virtual cross-sectional image 900e of the cooking thing 200, and outputting the virtual cross-sectional image 900e. The cooking progress state may be divided by a degree of internal cooking of the cooking thing 200 that changes as the cooking of the cooking thing 200 progresses. The reference cross-sectional images 951, 953, 955, 957, 959 may include identification information 961 indicating the degree of internal cooking of the cooking thing 200 according to the cooking progress state.

As an example, the non-transitory computer-readable storage medium may store one or more programs including instructions that, when executed by at least one processor, cause the at least one processor to perform the operations of obtaining at least one from among a type of the cooking thing 200 and size information about the cooking thing 200 using a vision sensor (e.g., the vision camera 1213), which is one of the at least one non-contact sensor (e.g., the vision camera 1213 and/or the thermal image camera 1215) and determining the reference cross-sectional images 951, 953, 955, 957, 959 corresponding to the cooking thing 200 considering at least one from among the type of the cooking thing 200 and the size information about the cooking thing 200.

As an example, the identification information 961 may be one from among a color temperature, a text, and a brightness.

As an example, the non-transitory computer-readable storage medium may store one or more programs including instructions that, when executed by at least one processor, cause the at least one processor to perform the operation of identifying an uncooked portion of the cooking thing 701 to 708 based on the internal temperature. The non-transitory computer-readable storage medium may store one or more programs including instructions that, when executed by at least one processor, cause the at least one processor to perform the operations of displaying the uncooked portion (e.g., areas 711, 713, and 715) on an image of the cooking thing 701 to 708 obtained using a vision sensor (e.g., the vision camera 1213), which is one of the at least one non-contact sensor (e.g., the vision camera 1213 and/or the thermal image camera 1215) and outputting as a virtual cooking thing image (FIG. 7).

As an example, the non-transitory computer-readable storage medium may store one or more programs including instructions that, when executed by at least one processor, cause the at least one processor to perform the operations of obtaining a cooking complete image corresponding to a preferred recipe from cooking complete images corresponding to a recipe of the cooking thing 200 and outputting the cooking complete image as a virtual cooking complete image and outputting the cooking complete image as a virtual cooking complete image.

As an example, the non-transitory computer-readable storage medium may store one or more programs including instructions that, when executed by at least one processor, cause the at least one processor to perform the operation of selectively outputting one of the virtual cross-sectional image 900e or the virtual cooking complete image.

As an example, the non-transitory computer-readable storage medium may store one or more programs including instructions that, when executed by at least one processor, cause the at least one processor to perform the operation of identifying cooking ingredients of the cooking thing 200 in a vision image obtained using a vision sensor (e.g., the vision camera) which is one of the at least one non-contact sensor (e.g., the vision camera 1213 and/or the thermal image camera 1215). The non-transitory computer-readable storage medium may store one or more programs including instructions that, when executed by at least one processor, cause the at least one processor to perform the operation of setting a cooking temperature and/or a cooking time for cooking a cooking ingredient that increases in temperature relatively fast by heating among cooking ingredients to a setting value for cooking the cooking thing 200.

As an example, the non-transitory computer-readable storage medium may store one or more programs including instructions that, when executed by at least one processor, cause the at least one processor to perform the operations of dividing a surface of the cooking thing 200 into a plurality of sectors and applying a different cooking environment based on at least one from among the cooking temperature and the cooking time for each sector.

As an example, the non-transitory computer-readable storage medium may store one or more programs including instructions that, when executed by at least one processor, cause the at least one processor to perform the operation of determining, as a selection cooking mode, one of a plurality of cooking modes considering a characteristic according to at least one from among a type of the cooking thing 200 and size information about the cooking thing 200.

As an example, the non-transitory computer-readable storage medium may store one or more programs including instructions that, when executed by at least one processor, cause the at least one processor to perform the operations of obtaining a partial area from the virtual cross-sectional image 900e or the virtual cooking thing image (FIG. 7) and changing a cooking environment based on at least one from among a cooking temperature and a cooking time for the partial area.

As an example, the non-transitory computer-readable storage medium may store one or more programs including instructions that, when executed by at least one processor, cause the at least one processor to perform the operation of transferring the virtual cross-sectional image 900e to an external device 300.

An electronic device (e.g., the cooking appliance 100 of FIG. 1, the cooking appliance 1210 of FIG. 13, or the smart oven 1400a, the smart hood 1400b, or the smart alone product 1400c of FIGS. 14A to 14C) according to various embodiments of the present disclosure may be various types of devices. The electronic devices may include, for example, a portable communication device (e.g., a smartphone), a server device, a computer device, a portable multimedia device, a portable medical device, a camera, a wearable device, or a home appliance. According to an embodiment of the present disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, the module may be implemented in a form of an application-specific integrated circuit (ASIC).

Various embodiments as set forth herein may be implemented as software including one or more instructions that are stored in a storage medium (e.g., the memory 1219) readable by a machine (e.g., the cooking appliance 1210 of FIG. 13). For example, a processor (e.g., the processor 1211 of FIG. 13) of the machine (e.g., the cooking appliance 1210 of FIG. 13) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments of the present disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server. According to various embodiments, each component (e.g., a module or a program) described above may include a single entity or multiple entities. Some of the plurality of entities may be separately disposed in different components. One or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A cooking appliance (100, 1210, 1400a, 1400b or 1400c), comprising:
a main body (110);
memory (1219) comprising one or more storage media storing instructions;
at least one non-contact sensor (1213-1, 1213-2); and
at least one processor (1211) comprising a processing circuit,
wherein the instructions are configured to, when executed individually or collectively by at least one processor (1211), cause the cooking appliance to:
determine an internal temperature of a cooking thing (200) based on at least one surface temperature sensed on a surface of the cooking thing (200) by a non-contact temperature sensor (1213-2), which is one of the at least one non-contact sensor (1213-1, 1213-2);
obtain, as a virtual cross-sectional image(900c) of the cooking thing (200), a reference cross-sectional image corresponding to the internal temperature among reference cross-sectional images (951, 953, 955, 957, 959) corresponding to cooking progress states; and
output the virtual cross-sectional image (900e),
wherein each of the cooking progress states is a degree of internal cooking of the cooking thing (200) that changes as cooking of the cooking thing (200) progresses, and
wherein the reference cross-sectional images (951, 953. 955, 957, 959) comprise identification information (961) indicating the degree of internal cooking of the cooking thing (200) according to a cooking progress state among the cooking progress states.

2. The cooking appliance of claim 1, wherein the instructions are configured to, when executed individually or collectively by at least one processor (1211), cause the cooking appliance to:
obtain, by a vision sensor (1213-1), which is one of the at least one non-contact sensor (1213-1, 1213-2), at least one from among a type of the cooking thing (200) and size information about the cooking thing (200); and
determine the reference cross-sectional images (951, 953, 955, 957, 959) corresponding to the cooking thing (200) based on the at least one from among the type of the cooking thing (200) and the size information about the cooking thing (200).

3. The cooking appliance of claim 1, wherein the identification information (961) is one from among a color temperature, a text, and a brightness.

4. The cooking appliance of claim 1, wherein the instructions are configured to, when executed individually or collectively by at least one processor (1211), cause the cooking appliance to:
identify an uncooked portion of the cooking thing (701, 702, 703, 704, 705, 706, 707, 708) based on the internal temperature; and
output a virtual cooking thing image that displays (711, 713, 715) the uncooked portion on an image of the cooking thing (701, 702, 703, 704, 705, 706, 707, 708) obtained by a vision sensor (1213-1), which is one of the at least one non-contact sensor (1213-1, 1213-2).

5. The cooking appliance of claim 1, wherein the instructions are configured to, when executed individually or collectively by at least one processor (1211), cause the cooking appliance to:
obtain a cooking complete image corresponding to a preferred recipe from among cooking complete images corresponding to recipes of the cooking thing (200); and
output the cooking complete image as a virtual cooking complete image.

6. The cooking appliance of claim 5, wherein the instructions are configured to, when executed individually or collectively by at least one processor (1211), cause the cooking appliance to selectively output one from among the virtual cross-sectional image and the virtual cooking complete image (900e).

7. The cooking appliance of claim 1, wherein the instructions are configured to, when executed individually or collectively by at least one processor (1211), cause the cooking appliance to:
identify cooking ingredients of the cooking thing in a vision image obtained by a vision sensor (1213-1), which is one of the at least one non-contact sensor (1213-1, 1213-2); and
set a cooking temperature or a cooking time for cooking a cooking ingredient, that increases in temperature relatively fast by heating among cooking ingredients, to a setting value for cooking the cooking thing (200).

8. The cooking appliance of claim 1, wherein the instructions are configured to, when executed individually or collectively by at least one processor (1211), cause the cooking appliance to divide the surface of the cooking thing (200) into a plurality of sectors and apply a different cooking environment based on at least one from among a cooking temperature and a cooking time for each sector.

9. The cooking appliance of claim 2, wherein the instructions are configured to, when executed individually or collectively by at least one processor (1211), cause the cooking appliance to determine, as a selection cooking mode, one of a plurality of cooking modes based on a characteristic according to at least one from among the type of the cooking thing (200) and the size information about the cooking thing (200).

10. The cooking appliance of claim 4, wherein the instructions are configured to, when executed individually or collectively by at least one processor (1211), cause the cooking appliance to:
obtain a partial area from the virtual cross-sectional image or the virtual cooking thing image (900e); and
change a cooking environment based on at least one from among a cooking temperature and a cooking time for the partial area.

11. A method for controlling a cooking appliance (100, 1210, 1400a, 1400b or 1400c), the method comprising:
determining an internal temperature of a cooking thing (200) based on at least one surface temperature sensed on a surface of the cooking thing (200) by a non-contact temperature sensor (1215);
obtaining, as a virtual cross-sectional image of the cooking thing (200), a reference cross-sectional image corresponding to the internal temperature among reference cross-sectional images (951, 953, 955, 957, 959) corresponding to cooking progress states; and
outputting the virtual cross-sectional image (900e),
wherein each of the cooking progress states is a degree of internal cooking of the cooking thing (200) that changes as the cooking of the cooking thing (200) progresses, and
wherein the reference cross-sectional images (951, 953, 955, 957, 959) include identification information (961) indicating the degree of internal cooking of the cooking thing (200) according to a cooking progress state among the cooking progress states.

12. The method of claim 11, further comprising:
obtaining, by a vision sensor (1213), at least one from among a type of the cooking thing (200) and size information about the cooking thing (200); and
determining the reference cross-sectional images (951, 953, 955, 957, 959) corresponding to the cooking thing (200) considering at least one from among the type of the cooking thing (200) and the size information about the cooking thing (200).

13. The method of claim 11, wherein the identification information (961) is one from among a color temperature, a text, and a brightness.

14. The method of claim 11, further comprising:
identifying an uncooked portion of the cooking thing based on the internal temperature (701, 702, 703, 704, 705, 706, 707, 708); and
outputting a virtual cooking thing image (FIG. 7) that displays (711, 713, 715) the uncooked portion on an image of the cooking thing (701, 702, 703, 704, 705, 706, 707, 708) obtained by a vision sensor (1213).

15. The method of claim 11, further comprising:
obtaining a cooking complete image corresponding to a preferred recipe from among cooking complete images corresponding to recipes of the cooking thing (200); and
outputting the cooking complete image as a virtual cooking complete image.
